# EUROPÄISCHE PATENTSCHRIFT

(11) **EP 2 164 924 B1**
(45) Veröffentlichungstag und Bekanntmachung des Hinweises auf die Patenterteilung: **09.08.2017**
(21) Anmeldenummer: 08785887.4
(22) Anmeldetag: 27.06.2008
(51) Int. Cl.: C09K 11/06, G01N 21/64

(54) **VERFAHREN ZUR VERBESSERUNG DER PHOTOSTABILITÄT UND/ODER KONTROLLE DER FLUORESZENZINTENSITÄT VON FLUORESZENZFARBSTOFFEN**
IMPROVING THE PHOTOSTABILITY AND/OR CONTROL OF THE FLUORESCENCE INTENSITY OF FLUORESCENT DYES
PROCÉDÉ D'AMÉLIORATION DE LA PHOTOSTABILITÉ ET/OU DE CONTRÔLE DE L'INTENSITÉ DE LA FLUORESCENCE DE COLORANTS FLUORESCENTS

(30) Priorität: 29.06.2007 DE 102007030403
(43) Veröffentlichungstag der Anmeldung: 24.03.2010
(73) Patentinhaber: Picoquant GmbH, 12489 Berlin (DE)
(72) Erfinder: TINNEFELD, Philip, 80999 München (DE); SAUER, Markus, 69124 Heidelberg (DE)
(74) Vertreter: Michalski Hüttermann & Partner Patentanwälte mbB
(86) Internationale Anmeldenummer: PCT/EP2008/058287
(87) Internationale Veröffentlichungsnummer: WO 2009/003948

(56) Entgegenhaltungen:
- J. VOGELSANG, ET. AL.: "A Reducing and Oxidizing System Minimizes Photobleaching and Blinking of Fluorescent Dyes" ANGEWANDTE CHEMIE INTERNATIONAL EDITION, Bd. 47, 2008, Seiten 5465-5469, XP002505788 Wiley-VCH
- I. RASNIK, ET. AL.: "Nonblinking and long-lasting single-molecule fluorescence imaging" NATURE METHODS, Bd. 3, 2006, Seiten 891-893, XP002505789 Nature Publishing Group
- J. WIDENGREN, ET. AL.: "Strategies to Improve Photostabilities in Ultrasensitive Fluorescence Spectroscopy" JOURNAL OF PHYSICAL CHEMISTRY A, Bd. 111, 29. Dezember 2006 (2006-12-29), Seiten 429-440, XP002505790 ACS
- P. S. DITTRICH, ET. AL.: "Photobleaching and stabilization of fluorophores used for single-molecule analysis with one- and two-photon excitation" APPLIED PHYSICS B, Bd. 73, 2001, Seiten 829-837, XP002505792 AIP
- M. HEILEMANN, ET. AL.: "Carbocyanine Dyes as Efficient Reversible Single Molecule Optical Switch" JOURNAL OF THE AMERICAN CHEMICAL SOCIETY, Bd. 127, 22. Februar 2005 (2005-02-22), Seiten 3801-3806, XP002505791 ACS

## Beschreibung

Die Erfindung betrifft das Gebiet der Photostabilisation und Fluoreszenzintensität von Fluoreszenzfarbstoffen. Weiterhin betrifft die Erfindung ein Verfahren zur Verlängerung der Zeitspanne, während der ein Fluoreszenzfarbstoff ausgewählt aus der Gruppe umfassend Rhodamine, Carborhodamine, Oxazin- und/oder Cyaninfarbstoffe im nicht fluoreszierenden Zustand verbleibt, Verwendung eines Redox-Puffers zur Verbesserung der Photostabilität und/oder Fluoreszenzintensität eines Fluoreszenzfarbstoff ausgewählt aus der Gruppe umfassend Rhodamine, Carborhodamine, Oxazin- und/oder Cyaninfarbstoffe und Fluoreszenzfarbstoff-Zusammensetzung enthaltend einen Fluoreszenzfarbstoff ausgewählt aus der Gruppe umfassend Rhodamine, Carborhodamine, Oxazin- und/oder Cyaninfarbstoffe.

Fluoreszenz ist eine Form der Lumineszenz, die nach Ende der Bestrahlung rasch endet. Fluoreszenzfarbstoffe sind organische Farbstoffe, die ultraviolette Strahlung oder sichtbares Licht absorbieren und innerhalb weniger Nanosekunden nahezu vollständig in Form von Licht (Emission) wieder abgeben. Das energieärmere Fluoreszenzlicht kann mit Hilfe von Detektoren registriert werden. Fluoreszenzfarbstoffe werden in zahlreichen Gebieten der Technik eingesetzt, beispielsweise in Leuchten oder als optische Verstärker in Farbstofflasern oder in der Fluoreszenzmikroskopie bis hin zur Beobachtung einzelner Moleküle mittels Einzelmolekülfluoreszenzspektropkopie, insbesondere jedoch in zahlreichen analytischen und diagnostischen Methoden in Biochemie und Medizin, beispielsweise bei der automatischen Sequenzierung von DNA, für die Detektion von DNA- und Protein-Chips, als Fluoreszenzmarker von Biomolekülen, oder als Fluoreszenzsonden zur spezifischen Markierung in der Immunologie.

Ein die Verwendbarkeit von Fluoreszenzfarbstoffen begrenzender Faktor ist insbesondere die Photostabilität der Farbstoffmoleküle. Durch lichtinduzierte chemische Veränderung verlieren Fluoreszenzfarbstoffe die Fähigkeit zu fluoreszieren. Dieser Vorgang wird als Photobleichen oder Photobleaching bezeichnet. Insbesondere unter Bedingungen starker Beleuchtung wie bei der Fluoreszenzmikroskopie, bei der Farbstoffinoleküle schnell geblichen werden, ist die Photostabilität der Farbstoffinoleküle deutlich erniedrigt. Der Vorgang des Photobleichens ist ein normalerweise irreversibler Prozess, wodurch Fluoreszenzfarbstoffe nur eine geringe Haltbarkeit besitzen und schnell verbraucht werden. Es besteht daher ein Bedarf an Mitteln und Verfahren, die Photostabilität von Fluoreszenzfarbstoffen zu verbessern.

Zur Photostabilisierung von Fluoreszenzfarbstoffen ist es bekannt, verschiedene Substanzen zu verwenden, wie Sauerstoff-abreichernde Systeme, oder Konjugate mit organischen Makromolekülen. Beispielsweise offenbart die Schrift WO 2006/079091 auch die Verwendung von Metall-Nanopartikeln zur Stabilisierung von Fluoreszenzfarbstoffen.

Nachteilig bei vielen bekannten Substanzen ist jedoch, dass diese bei vielen Fluoreszenzfarbstoffen zu einer reduzierten Photostabilität führen. Insbesondere ist für besonders empfindliche Anwendungen, beispielsweise für Farbstofflaser, die erreichbare Photostabilität vielfach ungenügend.

Ein weiterer Nachteil vieler Verfahren der Fluoreszenzspektroskopie ist deren unzureichende optische Auflösung. So unterliegt die Mikroskopie der Beugungsgrenze, die bei üblichen Mikroskopen etwa im Bereich von 250 nm liegt, wodurch kleinere Strukturen nicht aufgelöst werden können. Eine Möglichkeit, diese Beschränkung zu umgehen offenbart die Schrift WO 2006/127692, die vorschlägt, photoschaltbare Fluorophore zu verwenden. Hierbei werden fluoreszente Moleküle gezielt zur Fluoreszenz angeregt, deren Fluoreszenz-Abbildungsfunktion einzeln ausgewertet und anschließend zu einem hochauflösenden Bild verrechnet. Eine Voraussetzung für die Anwendbarkeit des vorgeschlagenen Verfahrens liegt jedoch in der Verfügbarkeit von Fluoreszenzfarbstoffen, die gezielt in einem fluoreszierenden bzw. nicht fluoreszierenden Zustand vorliegen. Hier sind nur wenige photoaktivierbare oder photoschaltbare Fluorophore bekannt. Ferner ist häufig die Schaltgeschwindigkeit eingeschränkt, so dass die Aufnahmedauer lang ist. Schließlich können die An- und Ausschaltraten nicht ausreichend kontrolliert werden.

Nachteilig bei dem in der Schrift WO 2006/127692 vorgeschlagenen Verfahren ist ferner, dass dieses einen fluoreszierenden bzw. nicht fluoreszierenden Zustand durch Einstrahlung von verschiedenen Wellenlängen erzielt, wodurch das Verfahren nur unter Verwendung komplexer Fluoreszenzvorrichtungen verwendbar ist.

I. RASNIK, ET. AL.: "Nonblinking and long-lasting single-molecule fluorescence imaging",NATURE METHODS, Bd. 3, 2006, Seiten 891-893 beschreibt eine Fluoreszenzfarbstoff-Zusammensetzung mit verbesserter Photostabilität enthaltend einen Fluoreszenzfarbstoff (Cyanin Cy5), einen Redox-Puffer umfassend wenigstens ein Reduktionsmittel (Trolox), und eine Sauerstoffgehalt verringernden Substanz, (eine Mischung aus Glukose-Oxidase und Katalase).

J. WIDENGREN, ET. AL.: "Strategies to Improve Photostabilities in Ultrasensitive Fluorescence Spectroscopy",JOURNAL OF PHYSICAL CHEMISTRY A, Bd. 111, 29. Dezember 2006 (2006-12-29), Seiten 429-440 und P. S. DITTRICH, ET. AL.: "Photobleaching and stabilization of fluorophores used for single-molecule analysis with one- and two-photon excitation",APPLIED PHYSICS B, Bd. 73, 2001, Seiten 829-837 beschreiben eine Fluoreszenzfarbstoff-Zusammensetzung mit verbesserter Photostabilität enthaltend einen Fluoreszenzfarbstoff (Rhodamin Farbstoff) und einen Redox-Puffer umfassend wenigstens ein Reduktionsmittel (Ascorbinsäure).

Aufgabe der Erfindung war es daher, wenigstens einen Nachteil des Standes der Technik zu überwinden und Mittel und Verfahren zur Verbesserung der Photostabilität und/oder Kontrolle der Fluoreszenzintensität von Fluoreszenzfarbstoffen zur Verfügung zu stellen.

Erfindungsgemäß wird die Aufgabe gelöst durch ein Verfahren gemäss Anspruch 1, die Verwendung nach Anspruch 5 und die Fluoreszenzfarbstoff-Zusammensetzung nach Anspruch 6.

Weitere vorteilhafte Ausgestaltungen der Erfindung ergeben sich aus den Unteransprüchen.

Unter dem Begriff "Fluoreszenzfarbstoff" im Sinne dieser Erfindung sind, wenn nicht anders angegeben, sowohl Farbstoffinoleküle wie auch Fluoreszenzfarbstoff-Komplexe oder Fluoreszenzfarbstoff-Konjugate zu verstehen, beispielsweise ausbildbar durch kovalente oder nicht-kovalente Wechselwirkung, Konjugieren oder andere Arten der Bindung eines Fluoreszenzfarbstoffs an anorganische oder organische Moleküle, insbesondere an Biomoleküle wie Proteine, Biotin oder Nukleinsäuren.

Unter dem Begriff "Photostabilität" ist im Sinne dieser Erfindung die mittlere Zahl der Zyklen von Strahlungsabsorption und Fluoreszenzemission der Fluoreszenzfarbstoffinoleküle zu verstehen, bis der Fluoreszenzfarbstoff seine Fluoreszenz verliert. Eine Verbesserung der Photostabilität ist insbesondere eine Erhöhung der Photostabilität. Eine Erhöhung der Photostabilität bedeutet insofern eine Verlängerung der Fluoreszenzdauer des Fluoreszenzfarbstoffinoleküls.

Unter dem Begriff "Reduktions-Oxidations-Mittel" sind im Sinne dieser Erfindung Stoffe zu verstehen, die sowohl als Reduktionsmittel als auch als Oxidationsmittel wirken können, beispielsweise Ubiquinon oder Cytochrome.

Unter dem Begriff "Redox-Puffer" sind im Sinne dieser Erfindung Stoffe oder Stoffgemische umfassend Reduktionsmittel, Oxidationsmittel und/oder Reduktions-Oxidations-Mittel zu verstehen, die in einer Elektronentransfer-Reaktion insbesondere einer photoinduzierten Elektronentransfer-Reaktion mit einem Fluoreszenzfarbstoff reagieren können und Elektronen auf einen Fluoreszenzfarbstoff übertragen oder von einem Fluoreszenzfarbstoff empfangen können.

Vorzugsweise umfasst ein Redox-Puffer ein Reduktionsmittel und ein Oxidationsmittel, wobei es vorgesehen sein kann, dass das Verhältnis von Reduktionsmittel zu Oxidationsmittel deutlich zu einer Seite verschoben ist oder der Anteil von Reduktionsmittel oder Oxidationsmittel Null ist.

Bevorzugte Redox-Puffer umfassen wenigstens ein Reduktionsmittel und wenigstens ein Oxidationsmittel oder wenigstens ein Reduktions-Oxidations-Mittel. Weiter bevorzugte Redox-Puffer umfassen wenigstens ein Reduktionsmittel, und/oder wenigstens ein Oxidationsmittel und/oder wenigstens ein Reduktions-Oxidations-Mittel.

Bevorzugt sind Verfahren zur Verbesserung der Photostabilität und/oder Fluoreszenzintensität eines Fluoreszenzfarbstoffs wobei man einem Fluoreszenzfarbstoff einen Redox-Puffer umfassend wenigstens ein Reduktionsmittel und wenigstens ein Oxidationsmittel oder wenigstens ein Reduktions-Oxidations-Mittel zusetzt.

Es wurde überraschend gefunden, dass Redox-Puffer umfassend Reduktionsmittel und Oxidationsmittel oder ein Reduktions-Oxidations-Mittel die Photostabilität von Fluoreszenzfarbstoffen erheblich steigern können.

Insbesondere wurde überraschend gefunden, dass erfindungsgemäße Redox-Puffer insbesondere umfassend wenigstens ein Reduktionsmittel und wenigstens ein Oxidationsmittel oder wenigstens ein Reduktions-Oxidations-Mittel eine Photostabilisierung einer breiten Anzahl von Fluoreszenzfarbstoff Klassen bewirken können. Dies ist insbesondere überraschend, da bekannte Substanzen üblicherweise nur bei wenigen Fluoreszenzfarbstoff Klassen eine Photostabilisierung bewirken können, bei anderen Klassen hingegen eine Verringerung der Stabilität verursachen können. Von besonderem Vorteil bei dem erfindungsgemäßen Redox-Puffer insbesondere umfassend wenigstens ein Reduktionsmittel und wenigstens ein Oxidationsmittel oder wenigstens ein Reduktions-Oxidations-Mittel ist, dass dieser universell oder nahezu universell für bekannte Klassen von Fluoreszenzfarbstoffen anwendbar ist und eine Verbesserung der Photostabilität und/oder Fluoreszenzintensität der Fluoreszenzfarbstoffe bewirken kann.

Weiterhin konnte festgestellt werden, dass erfindungsgemäße Redox-Puffer insbesondere umfassend wenigstens ein Reduktionsmittel und wenigstens ein Oxidationsmittel oder wenigstens ein Reduktions-Oxidations-Mittel eine Photostabilisierung von Fluoreszenzfarbstoffen bewirken können, die vorzugsweise wenigstens um einen Faktor 1,2 bis 5, bevorzugt um einen Faktor 2 bis 5 vorzugsweise um einen Faktor 4 bis 5 gegenüber ansonsten gleichen Systemen ohne Redox-Puffer oder einer Verwendung bekannter Reduktionsmittel bei ansonsten gleichen Systemen erhöht war. Beispielsweise konnte durch Messungen an Einzelmolekülen festgestellt werden, dass im Durchschnitt von mindestens 20 Messungen eine Verbesserung der Photostabilität um einen Faktor 4 bis 5 erzielt werden konnte.

Dies bedeutet einen großen Vorteil, da eine entsprechende Verlängerung der Messzeiten ermöglicht wird. Dies ist insbesondere in der Diagnostik und anderen medizinischen Anwendung von Fluoreszenzfarbstoffen von großer Bedeutung.

Weiterhin wurde überraschend gefunden, dass Redox-Puffer umfassend Reduktionsmittel und Oxidationsmittel die Intensität der Fluoreszenz von Fluoreszenzfarbstoffen ebenfalls deutlich steigern können. Beispielsweise konnte festgestellt werden, dass bei Einzelmolekülmessungen eine Erhöhung der Helligkeit von bis zu 25 % erzielt werden konnte.

Dies ist insbesondere überraschend, da aus einer Verbesserung der Photostabilität, also einer Erhöhung der mittleren Zahl der Fluoreszenzzyklen pro Fluoreszenzfarbstoffmolekül, nicht auf eine verbesserte Quantenausbeute emittierter fluoreszenter Strahlung pro eingestrahlter Strahlung durch das gleiche Reagenz geschlossen werden kann.

Ein weiterer bedeutender Vorteil der Verwendung eines Redox-Puffers liegt darin, dass Intensitätsfluktuationen, das "Blinken", reduziert werden können. Dies ist insbesondere von Vorteil in Einzelmolekülmessungen, da diese einer möglichst wenig unterbrochenen Fluoreszenz des Moleküls bedürfen.

Ein besonderer Vorteil der Redox-Puffer liegt insbesondere darin, dass diese selektiv Triplettzustände entvölkern oder löschen können, die Singulettzustände, von welchen aus die Fluoreszenzstrahlung abgegeben wird, hingegen nicht nachteilig beeinflussen.

In bevorzugten Verfahren setzt man einem Fluoreszenzfarbstoff einen Redox-Puffer umfassend wenigstens ein Reduktionsmittel, und/oder wenigstens ein Oxidationsmittel und/oder wenigstens ein Reduktions-Oxidations-Mittel zu.

Eine weitere bevorzugte Ausführungsform eines Verfahrens zur Erhöhung der Photostabilität und/oder Kontrolle der Fluoreszenzintensität betrifft ein Verfahren zur Einstellung des Fluoreszenzzustandes eines Fluoreszenzfarbstoffs wobei man einem Fluoreszenzfarbstoff einen Redox-Puffer umfassend wenigstens ein Reduktionsmittel, und/oder wenigstens ein Oxidationsmittel und/oder wenigstens ein Reduktions-Oxidations-Mittel zusetzt.

Unter dem Begriff "Fluoreszenzzustand eines Fluoreszenzfarbstoff' ist im Sinne dieser Erfindung zu verstehen, dass Fluoreszenzfarbstoffe in einem fluoreszierenden oder "An"-Zustand oder einem nicht fluoreszierenden Zustand, einem Dunkel- oder "Aus"-Zustand vorliegen können. Zwischen diesen Zuständen können Fluoreszenzfarbstoffe wechseln.

Ein weiterer besonderer Vorteil der Verwendung eines Redox-Puffers liegt darin, dass Intensitätsfluktuationen durch Verwendung eines Redox-Puffers gezielt zeitlich modulierbar sind.

So wurde weiter überraschend gefunden, dass Redox-Puffer umfassend wenigstens ein Reduktionsmittel, und/oder wenigstens ein Oxidationsmittel und/oder wenigstens ein Reduktions-Oxidations-Mittel es ermöglichen, die zeitlichen Fluktuationen der Fluoreszenzintensität eines Fluoreszenzfarbstoffs gezielt zu kontrollieren.

Insbesondere wurde überraschend gefunden, dass ein Redox-Puffer umfassend wenigstens ein Reduktionsmittel oder wenigstens ein Oxidationsmittel geeignet ist, den nicht fluoreszierenden Zustand, den Dunkel- oder "Aus"-Zustand, eines Fluoreszenzfarbstoffs zu verlängern.

Beispielsweise konnte festgestellt werden, dass ein Redox-Puffer umfassend wenigstens ein Reduktionsmittel bewirken kann, dass der reversible nicht fluoreszierende Zustand eines Fluoreszenzfarbstoffs im Bereich von bis zu 30 ms bis 200 ms anhalten kann. Weiterhin konnte festgestellt werden, dass ein Redox-Puffer umfassend wenigstens ein Oxidationsmittel bewirken kann, den reversibeln nicht fluoreszierende Zustand eines Fluoreszenzfarbstoffs zu verlängern, beispielsweise bis 100 ms.

Dies bedeutet einen großen Vorteil, da eine entsprechende Verlängerung des nicht fluoreszierenden Zustands ermöglicht, den Fluoreszenzfarbstoff in Verfahren zur Erhöhung der optischen Auflösung in der Fluoreszenzmikroskopie zu verwenden. Insbesondere in der Strukturbiologie, der biologischen Bildgebung, der Diagnostik und anderen medizinischen Anwendungen von Fluoreszenzfarbstoffen ist eine Verbesserung der optischen Auflösungsgrenze von großer Bedeutung.

Die gezielte Einstellung der zeitlichen Fluktuationen der Fluoreszenzintensität eines Fluoreszenzfarbstoffs durch den Zusatz von Redox-Puffern ermöglicht die gezielte Markierung bestimmter Moleküle in lebenden Zellen mit Fluoreszenzfarbstoffen, sowie eine deutliche Verbesserung der optischen Auflösung von Bild gebenden Fluoreszenzmikroskopieverfahren mit vergleichsweise geringem technischem Aufwand. Insbesondere eignen sich für diese Anwendungen eine Vielzahl spektral unterschiedlicher Farbstoffe, die bereits kommerziell verbreitet sind und keiner weiteren Modifikation bedürfen.

Ein weiterer bedeutender Vorteil der Verwendung eines Redox-Puffers umfassend wenigstens ein Reduktionsmittel und wenigstens ein Oxidationsmittel liegt darin, dass durch Einstellung des Verhältnisses zwischen Reduktionsmittel und Oxidationsmittel, beispielsweise durch die Zugabe von Oxidationsmittel zu einem überwiegend Reduktionsmittel enthaltenden Redox-Puffer, die Zeitspanne, während der der Fluoreszenzfarbstoff im nicht fluoreszierenden Zustand verbleibt, regulierbar ist.

Dies ermöglicht beispielsweise das Verbleiben eines Fluoreszenzfarbstoffs im nicht fluoreszierenden Zustand an unterschiedliche Verfahren der Fluoreszenzmessung anzupassen. Beispielsweise wird hierdurch ermöglicht, die Auflösung in der Sättigungsmikroskopie (DSOM Dynamic Saturation Optical Microscopy) zu erhöhen, die rasche Wechsel zwischen dem fluoreszierenden und nicht fluoreszierenden Zustand des Fluoreszenzfarbstoffs benötigt.

Weiterhin kann durch Einstellung des Verhältnisses zwischen Reduktionsmittel und Oxidationsmittel die Dauer des nicht fluoreszierenden "Aus"-Zustands eines Fluoreszenzfarbstoffs im Bereich vom Nanosekunden bis in den Millisekundenbereich eingestellt werden. So kann beispielsweise durch den Anteil an Oxidationsmittel eines überwiegend Reduktionsmittel enthaltenden Redox-Puffers eine Einstellung der Dauer des "Aus"-Zustands bewirkt werden. Ebenfalls kann durch den Anteil an Reduktionsmittel eines überwiegend Oxidationsmittel enthaltenden Redox-Puffers eine Einstellung der Dauer des "Aus"-Zustands bewirkt werden.

Beispielsweise kann die Dauer des nicht fluoreszierenden "Aus"-Zustands eines Fluoreszenzfarbstoffs im Bereich von ≥ 10 ns bis ≤ 200 ms, bevorzugt im Bereich von ≥ 100 ns bis ≤ 100 ms, vorzugsweise im Bereich von ≥ 1 ms bis ≤ 100 ms, besonders bevorzugt im Bereich von ≥ 5 ms bis ≤ 20 ms, liegen.

Die Dauer des fluoreszierenden "An"-Zustands des Fluoreszenzfarbstoffs kann zum einen durch die Laserleistung gesteuert werden, und kann beispielsweise ca. 5 ms bei ca. 100 W/cm² betragen. Beispielsweise kann Erhöhung der Laserleistung eine entsprechende antiproportionale Verkürzung der Dauer des fluoreszierenden "An"-Zustands des Fluoreszenzfarbstoffs bewirken. Dabei verändert sich vorzugsweise die Anzahl der emittierten Photonen während eines "An"-Zustands annähernd nicht. Die Dauer des "An"-Zustands kann darüber hinaus durch eine erhöhte Zugabe von Oxidationsmittel bzw. Reduktionsmittel erreicht werden, indem bei Konzentrationen ≥ 10 µmol/l bis ≤ 1 mol/l, bevorzugt ≥ 100 µmol/l bis ≤ 50 mmol/l, auch die Singulettzustände durch photoinduzierten Elektronentransfer entvölkert werden. Bei dieser Art der Steuerung des "An"-Zustands kann sich entsprechend die Zahl der emittierten Photonen während eines "An"-Zustands verringern.

Weiterhin kann die Anzahl der während eines "An"-Zustands emittierten Photonen durch die Konzentration des Reduktions- und/oder Oxidationsmittels beeinflusst werden. Beispielsweise kann eine erhöhte Konzentration der Reduktions- und/oder Oxidationsmittel eine Verringerungder Anzahl der während eines "An"-Zustands emittierten Photonen bewirken.

In bevorzugten Ausführungsformen ist der Fluoreszenzfarbstoff in einem Lösemittel, vorzugsweise einem Lösungsmittel, gelöst. Bevorzugte Lösemittel sind ausgewählt aus der Gruppe umfassend Wasser, Alkohole, vorzugsweise ausgewählt aus der Gruppe umfassend Methanol, Ethanol, Isopropanol, n-Propanol, n-Butanol, tert-Butanol und/oder Phenol, Dimethylsulfoxid (DMSO), Glycerol, organische Lösemittel und/oder Mischungen davon.

Bevorzugte Lösungsmittel sind ausgewählt aus der Gruppe umfassend Wasser, Methanol, Ethanol, Isopropanol und/oder n-Propanol.

Weiter bevorzugte Lösemittel sind Pufferlösungen, vorzugsweise ausgewählt aus der Gruppe umfassend phosphatgepufferte Salzlösung (PBS) und/oder BSS (balanced salt solution).

Noch ein weiterer Vorteil kann sich daraus ergeben, dass ebenfalls die Haltbarkeit oder Lagerbarkeit von Fluoreszenzfarbstoffen in Lösung erhöht sein kann, insbesondere in Glasbehältnissen und insbesondere bei Raumlichteinstrahlung, d.h. üblichen Weißlicht-Leuchtstoffröhren, oder Tageslichteinstrahlung. Beispielsweise kann die Haltbarkeit von Fluoreszenzfarbstoff-Lösung enthaltend einen Redox-Puffer umfassend wenigstens ein Reduktionsmittel und wenigstens ein Oxidationsmittel oder ein Reduktions-Oxidations-Mittel um 10 % oder 20 % gegenüber den ansonsten gleichen Fluoreszenzfarbstoff-Lösung ohne Redox-Puffer erhöht sein.

Vorzugsweise werden Oxidationsmittel und Reduktionsmittel des Redox-Puffers derart ausgewählt, dass das Gemisch von Oxidationsmittel und Reduktionsmittel einen Redox-Puffer ausbildet. Vorzugsweise verlieren das Oxidationsmittel und das Reduktionsmittel ihre Wirkung nicht dadurch, dass sie miteinander zu Verbindungen reagieren, die keine reduzierende oder oxidierende Wirkung mehr aufweisen. Es kann jedoch bevorzugt sein, dass das Oxidationsmittel und das Reduktionsmittel miteinander reagieren können, beispielsweise einander jeweils reduzieren oder oxidieren können.

Bevorzugt sind Kombinationen eines sanften oder schwachen Oxidationsmittels insbesondere organischen Oxidationsmittels und eines sanften oder schwachen Reduktionsmittels insbesondere organischen Reduktionsmittels.

In bevorzugten Ausführungsformen ist vorgesehen, dass der Redox-Puffer wenigstens ein Reduktionsmittel und wenigstens ein Oxidationsmittel oder wenigstens ein Reduktions-Oxidations-Mittel umfasst. Der Redox-Puffer kann ein oder mehrere Reduktionsmittel und ein oder mehrere Oxidationsmittel oder ein oder mehrere Reduktions-Oxidations-Mittel umfassen. Beispielsweise kann der Redox-Puffer Mischungen mehrerer Reduktionsmittel und/oder Mischungen mehrerer Oxidationsmittel umfassen. Es ist bevorzugt, dass der Redox-Puffer ein Reduktionsmittel und ein Oxidationsmittel oder ein Reduktions-Oxidations-Mittel umfasst.

In weiter bevorzugten Ausführungsformen, insbesondere in Verfahren zur Einstellung des Fluoreszenzzustandes eines Fluoreszenzfarbstoffs ist vorgesehen, dass der Redox-Puffer wenigstens ein Reduktionsmittel, und/oder wenigstens ein Oxidationsmittel und/oder wenigstens ein Reduktions-Oxidations-Mittel umfasst.

Unter dem Begriff "Oxidationsmittel" sind im Sinne dieser Erfindung Substanzen zu verstehen, die aufgrund ihres Redoxpotentials mit dem Fluoreszenzfarbstoff in einem photoinduzierten Elektronentransfer reagieren können. Das bedeutet, dass der elektronisch angeregte Fluoreszenzfarbstoff durch eine Kollision mit dem Oxidationsmittel ein Elektron abgibt und ein Radikalkation entsteht. Das dafür notwendige Redoxpotential hängt vom Redoxpotential des Fluoreszenzfarbstoffs, der Übergangsenergie des Fluoreszenzfarbstoff und der Umgebung, d.h. vom Lösungsmittel und der Temperatur, ab.

Das Redoxpotential eines geeigneten Oxidationsmittels liegt bei pH 7 gemessen gegen Normalwasserstoffelektrode (NHE) in Acetonitril vorzugsweise im Bereich von ≥ -1 V bis ≤ 0,2 V, bevorzugt im Bereich von ≥ -600 mV bis ≤ 100 mV, bevorzugt im Bereich von ≥ -250 mV bis ≤ -200 mV.

Welches Oxidationsmittel für einen gegebenen Fluoreszenzfarbstoff die beste Erhöhung der Photostabilität und/oder Fluoreszenzintensität ergibt, kann der Fachmann durch wenige Routineversuche jeweils leicht ermitteln. Ebenfalls kann der Fachmann durch wenige Routineversuche jeweils leicht ermitteln welches Oxidationsmittel für einen gegebenen Fluoreszenzfarbstoff die beste Verweildauer in Verfahren zur Einstellung des Fluoreszenzzustandes eines Fluoreszenzfarbstoffs ergibt. Das Oxidationsmitte ist Methylviologen. Unter dem Begriff "Reduktionsmittel" sind im Sinne dieser Erfindung Substanzen zu verstehen, die einem Fluoreszenzfarbstoffmolekül ein Elektron übertragen können, insbesondere durch Kollision in einem elektronisch angeregten Zustand, d.h. den Fluoreszenzfarbstoff unter Bildung eines Farbstoffradikalanions reduzieren. Das dafür notwendige Redoxpotential hängt vom Potential des Fluoreszenzfarbstoffs, der Übergangsenergie des Fluoreszenzfarbstoff und der Umgebung, d.h. vom Lösungsmittel und der Temperatur, ab.

Das Redoxpotential eines geeigneten Reduktionsmittels liegt bei pH 7 gemessen gegen Normalwasserstoffelektrode (NHE) in Acetonitril vorzugsweise im Bereich von ≥ 0,1 V bis ≤ 2 V, bevorzugt im Bereich von ≥ 500 mV bis ≤ 800 mV, bevorzugt im Bereich von ≥ 540 mV bis ≤ 750 mV.

Welches Reduktionsmittel für einen gegebenen Fluoreszenzfarbstoff die beste Erhöhung der Photostabilität und/oder Fluoreszenzintensität ergibt, kann der Fachmann durch wenige Routineversuche jeweils leicht ermitteln. Ebenfalls kann der Fachmann durch wenige Routineversuche jeweils leicht ermitteln welches Reduktionsmittel für einen gegebenen Fluoreszenzfarbstoff die beste Verweildauer in Verfahren zur Einstellung des Fluoreszenzzustandes eines Fluoreszenzfarbstoffs ergibt.

Reduktionsmittel sind ausgewählt aus der Gruppe umfassend 6-Hydroxy-2,5,7,8-tetramethylchroman-2-carbonsäure, Ascorbinsäure, β-Mercaptoethylamin, Dithiothreito und/oder Mischungen davon. Ein besonders bevorzugtes Reduktionsmittel ist 6-Hydroxy-2,5,7,8-tetramethylchroman-2-carbonsäure (Trolox®).

Bevorzugte Redox-Puffer umfassen als Reduktionsmittel Trolox® und als Oxidationsmittel Methylviologen,

Besonders bevorzugte Redox-Puffer umfassen als Reduktionsmittel Ascorbinsäure und als Oxidationsmittel Methylviologen. Von Vorteil bei der Verwendung eines Redox-Puffers umfassend als Reduktionsmittel Ascorbinsäure und als Oxidationsmittel Methylviologen ist, dass Intensitätsfluktuationen bereits bei niedrigen Konzentrationen reduziert werden können. Von Vorteil ist weiterhin, dass eine erhebliche Verbesserung der Photostabilität von Fluoreszenzfarbstoffen erzielt werden kann. Weiterhin ist von Vorteil, dass Ascorbinsäure wie auch Methylviologen eine gute Wasserlöslichkeit aufweisen, wodurch die Verwendung in wässrigen Systemen erleichtert wird.

Weiter geeignete Redox-Puffer-Systeme sind ausgewählt aus der Gruppe umfassend Fe²⁺/Fe³⁺, Ferricyanid/Ferrocyanid, Cvtochrom a (Fe²⁺/Fe³⁺⁾, Cytochrom c (Fe²⁺/Fe ³⁺) und/oder Cytochrom b2 (Fe²⁺/Fe³⁺).

In bevorzugten Ausführungsformen liegt das Verhältnis von Reduktionsmittel zu Oxidationsmittel im Bereich von ≥ 1:3 bis ≤ 10:1, bevorzugt im Bereich von ≥ 1:2 bis ≤ 4:1, vorzugsweise im Bereich von ≥ 1:1 bis ≤ 2:1. In weiter bevorzugten Ausführungsformen liegt das Verhältnis von Reduktionsmittel zu Oxidationsmittel im Bereich von ≥ 1:3 bis ≤ 5:1, bevorzugt im Bereich von ≥ 1:2 bis ≤ 3:1, vorzugsweise im Bereich von ≥ 1,5:1 bis ≤ 2:1

In bevorzugten Ausführungsformen liegt ein Überschuss des Reduktionsmittels vor. Vorzugsweise kann das Verhältnis von Reduktionsmittel zu Oxidationsmittel im Bereich von ≥ 2:1 bis ≤ 5:1, bevorzugt im Bereich von ≥ 3:1 bis ≤ 4:1, liegen. Insbesondere für Fluoreszenzfarbstoffe ausgewählt aus der Gruppe umfassend Cyanine, Rhodamine, Oxazine, Fluoreszine und/oder Carborhodamine kann ein Überschuss, insbesondere ein leichter Überschuss des Reduktionsmittels zum Oxidationsmittel im Bereich von ≥ 2:1 bis ≤ 3:1 zu einer Erhöhung der Photostabilität des Fluoreszenzfarbstoffs und/oder einer Erhöhung der Intensität der Fluoreszenzstrahlung führen.

Es kann auch bevorzugt sein, dass das Oxidationsmittel im Überschuss vorliegt, beispielsweise kann das Verhältnis von Reduktionsmittel zu Oxidationsmittel im Bereich von ≥ 1:3 bis ≤ 1:1, vorzugsweise im Bereich von ≥ 1:1,5 bis ≤ 1:2, liegen. Beispielsweise kann ein Überschuss, insbesondere ein leichter Überschuss des Oxidationsmittels, beispielsweise ein Verhältnis von Reduktionsmittel zu Oxidationsmittel im Bereich von ≥ 1:1 bis ≤ 1:2 zu einer Erhöhung der Photostabilität des Fluoreszenzfarbstoffs und/oder einer Erhöhung der Intensität der Fluoreszenzstrahlung führen.

In weiter bevorzugten Ausführungsformen insbesondere in Verfahren zur Einstellung des Fluoreszenzzustandes eines Fluoreszenzfarbstoffs kann das Verhältnis von Reduktionsmittel zu Oxidationsmittel deutlich zu einer Seite verschoben sein oder der Anteil von Reduktionsmittel oder Oxidationsmittel Null sein. Beispielsweise kann das Verhältnis von Reduktionsmittel zu Oxidationsmittel im Bereich von ≤ 1000:0 bis ≤ 0:1000, bevorzugt im Bereich von ≥ 1000:0 bis ≤ 1:100, vorzugsweise im Bereich von ≥ 100:1 bis ≤ 0:1000, weiter bevorzugt im Bereich von ≥ 100:1 bis ≤ 1:100, besonders bevorzugt im Bereich von ≥ 10:1 bis ≤ 1:10, liegen.

Die Konzentration des Reduktionsmittels kann in weiten Bereichen variieren. In bevorzugten Ausführungsformen liegt die Konzentration des Reduktionsmittels im Bereich von ≥ 1 µM mM bis ≤ 100 mM, vorzugsweise im Bereich von ≥ 0,1 mM bis ≤ 10 mM, bevorzugt im Bereich von ≥ 0,5 mM bis ≤ 5 mM, besonders bevorzugt im Bereich von ≥ 1 mM bis ≤ 3 mM. Die Konzentration des Reduktionsmittels Trolox® liegt vorzugsweise im Bereich von ≥ 0,5 mM bis ≤ 3 mM, bevorzugt im Bereich von ≥ 1,8 mM bis ≤ 2,5 mM.

Die Konzentration des Oxidationsmittels kann in weiten Bereichen variieren. In bevorzugten Ausführungsformen liegt die Konzentration des Oxidationsmittels im Bereich von ≥ 1 µM bis ≤ 200 mM, vorzugsweise im Bereich von ≥ 0,1 mM bis ≤ 10 mM, bevorzugt im Bereich von ≥ 1 mM bis ≤ 10 mM, besonders bevorzugt im Bereich von ≥ 1 mM bis ≤ 3 mM.

Die Konzentration des Oxidationsmittels Methylviologen liegt vorzugsweise im Bereich von ≥ 0,2 mM bis ≤ 3 mM, bevorzugt im Bereich von ≥ 0,5 mM bis ≤ 1 mM.

Die Konzentration des Redox-Puffers umfassend wenigstens ein Reduktionsmittel und wenigstens ein Oxidationsmittel oder ein Reduktions-Oxidations-Mittel liegt beispielsweise in einer wässrigen Lösung vorzugsweise im Bereich von ≥ 0,2 mM bis ≤ 10 mM, bevorzugt im Bereich von ≥ 0,5 mM bis ≤ 5 mM, besonders bevorzugt im Bereich von ≥ 1 mM bis ≤ 3 mM. In weiteren Ausführungsformen kann die Konzentration eines Redox-Puffers umfassend wenigstens ein Reduktionsmittel und/oder wenigstens ein Oxidationsmittel oder ein Reduktions-Oxidations-Mittel beispielsweise in einer wässrigen Lösung vorzugsweise im Bereich von ≥ 0 mM bis ≤ 100 mM, bevorzugt im Bereich von ≥ 0,01 mM bis ≤ 50 mM, weiter bevorzugt im Bereich von ≥ 0,1 mM bis ≤ 10 mM, auch bevorzugt im Bereich von ≥ 0,2 mM bis ≤ 5 mM, besonders bevorzugt im Bereich von ≥ 0,5 mM bis ≤ 2 mM liegen.

In bevorzugten Ausführungsformen des Verfahrens verringert man den Sauerstoffgehalt, vorzugsweise entfernt man der Sauerstoff, bevorzugt indem man insbesondere einer Lösung des Fluoreszenzfarbstoffs den Sauerstoffgehalt verringernde Substanzen zusetzt. Bevorzugt sind enzymatische Systeme zur Verringerung oder Entfernung des Sauerstoffs, insbesondere bevorzugt ist ein enzymatisches System umfassend Glukoseoxidase. Vorzugsweise sind die den Sauerstoffgehalt verringernde Substanzen ausgewählt aus der Gruppe umfassend Glukoseoxidase, Katalase und/oder Glukose. Der Sauerstoffgehalt kann ebenfalls physikalisch beispielsweise durch Durchströmen einer Lösung mit Stickstoff entfernt werden.

In vorteilhafter Weise können diese Substanzen den Gehalt an Sauerstoff insbesondere in einer Fluoreszenzfarbstoffe enthaltenden Lösung verringern. Insbesondere ist von Vorteil, dass durch Zusetzen von den Sauerstoffgehalt verringernden Substanzen eine weitere Verbesserung der Photostabilität und/oder Fluoreszenzintensität eines Fluoreszenzfarbstoffs erzielt werden kann. Insbesondere konnte bei Cyaninen durch Zugabe von den Sauerstoffgehalt verringernden Substanzen eine signifikante Photostabilitätserhöhung festgestellt werden. Es kann beispielsweise für sehr starke Anregungsbedingungen wie Einzelmolekülfluoreszenzmessungen auch bevorzugt sein Fluoreszenzfarbstoffen beispielsweise Oxazinen keine den Sauerstoffgehalt verringernden Substanzen zuzusetzen.

Bevorzugt setzt man bei einer Zugabe von den Sauerstoffgehalt verringernde Substanzen weiterhin Dithiothreitol (DTT) und/oder Tris-[2-carboxyethyl]-phosphin-hydrochlorid (TCEP) zu.

Bevorzugte Konzentrationen liegen im Bereich von ≥ 10 µg/ml bis ≤ 200 µg/ml, vorzugsweise im Bereich von ≥ 50 µg/ml bis ≤ 100 µg/ml Glukoseoxidase, und/oder im Bereich von ≥ 20 µg/ml bis ≤ 500 µg/ml, vorzugsweise im Bereich von ≥ 100 µg/ml bis ≤ 200 µg/ml Katalase, und/oder im Bereich von ≥ 5 % (w/v) bis ≤ 15 % (w/v), vorzugsweise im Bereich von ≥ 10 % (w/v) bis ≤ 22 % (w/v) Glukose, und/oder im Bereich von ≥ 0,1 mM bis ≤ 1,2 mM, bevorzugt im Bereich von ≥ 0,4 mM bis ≤ 0,8 mM Dithiothreitol (DTT). Fluoreszenzfarbstoffe, deren Photostabilisierung durch einen Redox-Puffer umfassend Reduktionsmittel und Oxidationsmittel oder Reduktions-Oxidations-Mittel erhöht werden kann, sind vorzugsweise ausgewählt aus der Gruppe umfassend aus Fluoreszenzfarbstoffen mit einem Molekulargewicht von 200 g/mol bis 1000 g/mol bezogen auf den Chromophor. Bevorzugte Fluoreszenzfarbstoffe umfassen Fluoreszenzfarbstoffe mit visuell erfassbarer Fluoreszenz. In bevorzugten Ausführungsformen sind die Fluoreszenzfarbstoffe ausgewählt aus der Gruppe umfassend Rhodamine, Carborhodamine, Oxazin- und/oder Cyaninfarbstoffe insbesondere Indolcarbocyanine und/oder Indoldicarbocyanine. Bevorzugt sind Redox-Puffer umfassend Reduktionsmittel und Oxidationsmittel zur Verbesserung der Photostabilität der kationischen oder anionischen Form der Fluoreszenzfarbstoffe verwendbar.

Ein besonderer Vorteil des erfindungsgemäßen Redox-Puffers kann dadurch zur Verfügung gestellt werden, dass dieser eine Photostabilisierung einer großen Anzahl von Fluoreszenzfarbstoff-Klassen bewirken kann.

In bevorzugten Ausführungsformen sind Redox-Puffer umfassend Reduktionsmittel und Oxidationsmittel oder Reduktions-Oxidations-Mittel verwendbar zur Verbesserung der Photostabilität und/oder Fluoreszenzintensität eines Fluorescein-Fluoreszenzfarbstoffs gemäß der nachstehenden allgemeinen Formel (I) 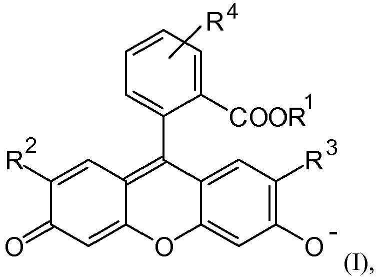 worin:
- R¹: ist ausgewählt aus der Gruppe umfassend H und/oder C₁-C₅-Alkyl, vorzugsweise H oder C₂H₅,
- R², R³: sind gleich oder unabhängig voneinander ausgewählt aus der Gruppe umfassend H, F, Cl, COOH, SO₃H, C₁-C₅-Alkyl, C₁-C₅-Alkylsulfonsäure und/oder C₁-C₅-Alkyl-Carbonsäure, vorzugsweise H, CH₃ und/oder C₂H₅,
- R⁴: ist ausgewählt aus der Gruppe umfassend H, C₁-C₅-Alkyl, COOH und/oder COOR¹, vorzugsweise H, COOH oder COOR¹.

Eine gute Verbesserung der Photostabilisierung durch einen Redox-Puffer wurde erreicht für den Fluorescein-Fluoreszenzfarbstoff Oregon Green, wobei gemäß der Formel (I) R¹=H, R²=F, R³=F und R⁴= COOH ist. Dieser Fluorescein-Fluoreszenzfarbstoff ist erfindungsgemäß bevorzugt.

In weiter bevorzugten Ausführungsformen sind Redox-Puffer umfassend Reduktionsmittel und Oxidationsmittel oder Reduktions-Oxidations-Mittel verwendbar zur Verbesserung der Photostabilität und/oder Fluoreszenzintensität eines Rhodamin-Fluoreszenzfarbstoffs gemäß der nachstehenden allgemeinen Formel (II) 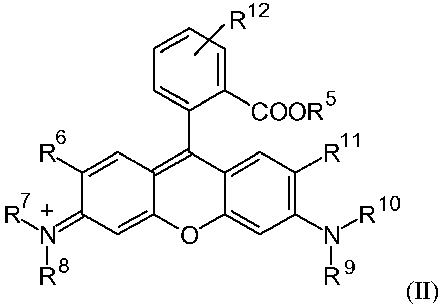 worin:
- R⁵: ist ausgewählt aus der Gruppe umfassend H und/oder C₁-C₅-Alkyl, vorzugsweise H und/oder C₂H₅,
- R⁷, R⁸, R⁹, R¹⁰: sind gleich oder unabhängig voneinander ausgewählt aus der Gruppe umfassend H, C₁-C₅-Alkyl, C₁-C₅-Alkylsulfonsäure und/oder C₁-C₅-Alkyl-Carbonsäure, vorzugsweise CH₃ und/oder C₂H₅,
- R⁶, R¹¹: sind gleich oder unabhängig voneinander ausgewählt aus der Gruppe umfassend H, F, Cl, COOH, SO₃H C₁-C₅-Alkyl, C₁-C₅-Alkylsulfonsäure und/oder C₁-C₅-Alkyl-Carbonsäure, vorzugsweise CH₃, oder
R⁶ bildet mit R⁷ und/oder R¹¹ bildet mit R¹⁰, gegebenenfalls über eine Gruppe -CH- oder -CH₂-, einen Ring aus, vorzugsweise einen aromatischen 5-Ring oder 6-Ring,
- R¹²: ist ausgewählt aus der Gruppe umfassend H, C₁-C₅-Alkyl, COOH und/oder COOR⁵, vorzugsweise H, COOH und/oder COOR⁵.

Eine besonders gute Verbesserung der Photostabilisierung durch Redox-Puffer wurde erreicht für den Rhodamin-Fluoreszenzfarbstoff RhodaminGreen, wobei gemäß der Formel (II) R⁵=R⁶=R⁷=R⁸=R⁹=R¹⁰=R¹¹=H, R¹²=COOH ist. Beispielsweise konnte eine Verbesserung der Photostabilisierung durch Redox-Puffer um einen Faktor 2 festgestellt werden. Dieser Rhodamin-Fluoreszenzfarbstoff ist erfindungsgemäß bevorzugt.

In besonders bevorzugten Ausführungsformen sind Redox-Puffer umfassend Reduktionsmittel und Oxidationsmittel oder Reduktions-Oxidations-Mittel verwendbar zur Verbesserung der Photostabilität und/oder Fluoreszenzintensität eines Carborhodamin-Fluoreszenzfarbstoffs gemäß der nachstehenden allgemeinen Formel (III) 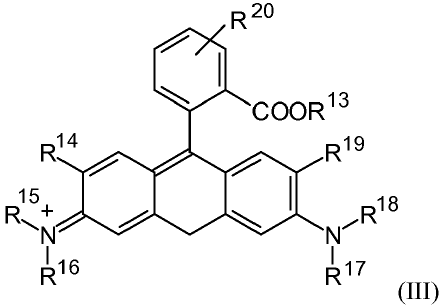 worin:
- R¹³: ist ausgewählt aus der Gruppe umfassend H und/oder C₁-C₅-Alkyl, vorzugsweise H und/oder C₂H₅,
- R¹⁵, R¹⁶, R¹⁷, R¹⁸: sind gleich oder unabhängig voneinander ausgewählt aus der Gruppe umfassend H, C₁-C₅-Alkyl, C₁-C₅-Alkylsulfonsäure und/oder C₁-C₅-Alkyl-Carbonsäure, vorzugsweise CH₃ und/oder C₂H₅,
- R¹⁴, R¹⁹: sind gleich oder unabhängig voneinander ausgewählt aus der Gruppe umfassend H, F, Cl, COOH, SO₃H, C₁-C₅-Alkyl, C₁-C₅-Alkylsulfonsäure und/oder C₁-C₅-Alkyl-Carbonsäure, vorzugsweise CH₃, oder
R¹⁴ bildet mit R¹⁵ und/oder R¹⁹ bildet mit R¹⁸, gegebenenfalls über eine Gruppe -CH- oder -CH₂-, einen Ring aus, vorzugsweise einen aromatischen 5-Ring oder 6-Ring,
- R²⁰: ist ausgewählt aus der Gruppe umfassend H, C₁-C₅-Alkyl, COOH und/oder COOR¹³, vorzugsweise H, COOH und/oder COOR¹³.

Die Photostabilität der Carborhodamin-Fluoreszenzfarbstoffe gemäß der Formel (III) konnte besonders gut verbessert werden durch den Redox-Puffer umfassend als Reduktionsmittel Trolox® und als Oxidationsmittel Methylviologen.

In auch bevorzugten Ausführungsformen sind Redox-Puffer umfassend Reduktionsmittel und Oxidationsmittel oder Reduktions-Oxidations-Mittel verwendbar zur Verbesserung der Photostabilität und/oder Fluoreszenzintensität eines Oxazin-Fluoreszenzfarbstoffs gemäß der nachstehenden allgemeinen Formel (IV) 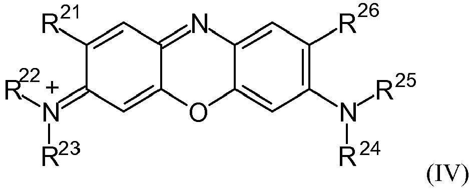 worin:
- R²¹, R²⁶: sind gleich oder unabhängig voneinander ausgewählt aus der Gruppe umfassend H, F, Cl, COOH, SO₃H, C₁-C₅-Alkyl, C₁-C₅-Alkylsulfonsäure und/oder C₁-C₅-Alkyl-Carbonsäure,
vorzugsweise CH₃, oder
R²¹ bildet mit R²² und/oder R²⁶ bildet mit R²⁵, gegebenenfalls über eine Gruppe -CH- oder -CH₂-, einen Ring aus, bevorzugt einen 5-Ring oder 6-Ring,vorzugsweise einen aromatischen 5-Ring oder 6-Ring,
- R²², R²³, R²⁴, R²⁵: sind gleich oder unabhängig voneinander ausgewählt aus der Gruppe umfassend H, C₁-C₅-Alkyl, C₁-C₅-Alkylsulfonsäure und/oder C₁-C₅-Alkyl-Carbonsäure, vorzugsweise H, CH₃ und/oder C₂H₅.

In auch bevorzugten Ausführungsformen sind Redox-Puffer umfassend Reduktionsmittel und Oxidationsmittel oder Reduktions-Oxidations-Mittel verwendbar zur Verbesserung der Photostabilität und/oder Fluoreszenzintensität eines Oxazin-Fluoreszenzfarbstoffs gemäß der nachstehenden allgemeinen Formel (V) 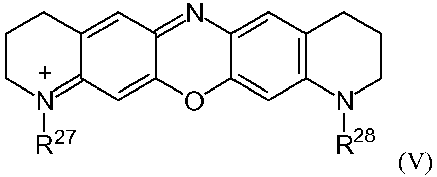 worin:
- R²⁷, R²⁸: sind gleich oder unabhängig voneinander ausgewählt aus der Gruppe umfassend H, C₁-C₅-Alkyl, C₁-C₅-Alkylsulfonsäure und/oder C₁-C₅-Alkyl-Carbonsäure, vorzugsweise (CH₂)₃COOH und/oder C₂H₅.

Eine gute Verbesserung der Photostabilisierung durch Redox-Puffer konnte insbesondere für Oxazin-Fluoreszenzfarbstoffe, wobei gemäß der Formel (V) R²⁷=(CH₂)₃COOH, R²⁸=C₂H₅ ist, erzielt werden. Beispielsweise konnte eine Verbesserung der Photostabilisierung durch Redox-Puffer um einen Faktor 2 festgestellt werden. Diese Oxazin-Fluoreszenzfarbstoffe sind erfindungsgemäß besonders bevorzugt.

In sehr bevorzugten Ausführungsformen sind Redox-Puffer umfassend Reduktionsmittel und Oxidationsmittel oder Reduktions-Oxidations-Mittel verwendbar zur Verbesserung der Photostabilität und/oder Fluoreszenzintensität eines Cyanin-Fluoreszenzfarbstoffs gemäß der nachstehenden allgemeinen Formel (VI) 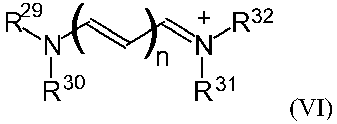 worin:
- R²⁹, R³⁰, R³¹, R³²: sind gleich oder unabhängig voneinander ausgewählt aus der Gruppe umfassend H, C₁-C₅-Alkyl, C₁-C₅-Alkylsulfonsäure und/oder C₁-C₅-Alkyl-Carbonsäure, vorzugsweise (CH₂)₅COOH, CH₃ und/oder C₂H₅,
- n: ist 1, 2, 3, 4 oder 5, vorzugsweise 1 oder 2.

Insbesondere sind auf der Indolstruktur basierende Indolcarbo-, Indoldicarbo- und Indoltricarbocyanin-Fluoreszenzfarbstoffe besonders vorteilhaft.

In auch sehr bevorzugten Ausführungsformen sind Redox-Puffer umfassend Reduktionsmittel und Oxidationsmittel oder Reduktions-Oxidations-Mittel verwendbar zur Verbesserung der Photostabilität und/oder Fluoreszenzintensität eines Indolcyanin-Fluoreszenzfarbstoffs gemäß der nachstehenden allgemeinen Formel (VII) 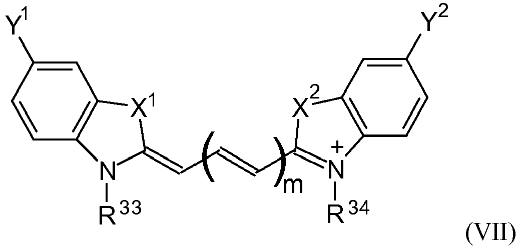 worin:
- R³³, R³⁴: sind gleich oder unabhängig voneinander ausgewählt aus der Gruppe umfassend H, C₁-C₅-Alkyl, C₁-C₅-Alkylsulfonsäure und/oder C₁-C₅-Alkyl-Carbonsäure, vorzugsweise (CH₂)₅COOH, und/oder C₂H₅,
- X¹, X²: sind gleich oder unabhängig voneinander ausgewählt aus der Gruppe umfassend S, O, CH, CH₂, C(CH₃), C(CH₃)₂ und/oder S(CH₃)₂,
- Y¹, Y²: sind gleich oder unabhängig voneinander ausgewählt aus der Gruppe umfassend H, COOH und/oder SO₃H, vorzugsweise SO₃H,
- m: ist 1, 2, 3, 4 oder 5, vorzugsweise 1 oder 2.

Eine gute Verbesserung der Photostabilisierung durch Redox-Puffer kann beispielsweise für den Indolcyanin-Fluoreszenzfarbstoff Cyanin 3, wobei gemäß der Formel (VII) R³³=R³⁴=C₂H₅, X¹=X²= C(CH₃)₂, Y¹=Y²=SO₃H, SO₃⁻, m=1 ist, erzielt werden.

Eine besonders gute Verbesserung der Photostabilisierung durch Redox-Puffer konnte insbesondere für den Indolcyanin-Fluoreszenzfarbstoff Cyanin 5 gemäß der nachstehenden Formel (VIII) 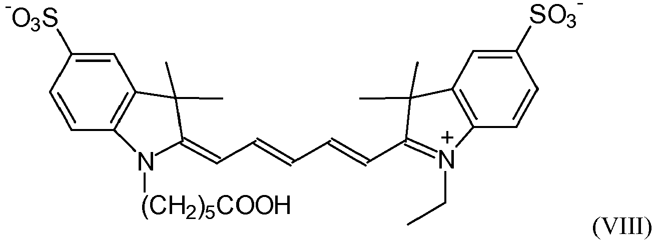 wobei entsprechend gemäß der Formel (VII) R³³=(CH₂)₅COOH, R³⁴= C₂H₅, X¹=X²= C(CH₃)₂, Y¹=Y²=SO₃H, SO₃⁻, m=2, ist, festgestellt werden. Diese Indolcyanin Fluoreszenzfarbstoffe sind erfindungsgemäß besonders bevorzugt.

Ganz besonders bevorzugt sind Dicarbocyanin- und Disulfocyanin-Indolcyanin-Fluoreszenzfarbstoffe.

In noch sehr bevorzugten Ausführungsformen sind Redox-Puffer umfassend Reduktionsmittel und Oxidationsmittel oder Reduktions-Oxidations-Mittel verwendbar zur Verbesserung der Photostabilität und/oder Fluoreszenzintensität eines Indolcyanin-Fluoreszenzfarbstoffs gemäß der nachstehenden allgemeinen Formel (IX) 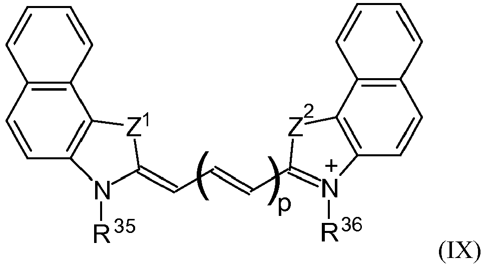 worin:
- R³⁵, R³⁶: sind gleich oder unabhängig voneinander ausgewählt aus der Gruppe umfassend H, C₁-C₅-Alkyl, C₁-C₅-Alkylsulfonsäure und/oder C₁-C₅-Alkyl-Carbonsäure, vorzugsweise (CH₂)₄SO₃H, und/oder C₂H₅,
- Z¹, Z²: sind gleich oder unabhängig voneinander ausgewählt aus der Gruppe umfassend S, O, CH, CH₂, C(CH₃), C(CH₃)₂ und/oder S(CH₃)₂,
- p: ist 1, 2, 3, 4 oder 5, vorzugsweise 1 oder 2.

Eine gute Verbesserung der Photostabilisierung durch Redox-Puffer kann beispielsweise für den Indolcyanin-Fluoreszenzfarbstoff IndocyaninGreen, wobei gemäß der Formel (IX) R³⁵=R³⁶=(CH₂)₄SO₃H, Z¹, Z²= C(CH₃)₂, p=3, ist, erzielt werden.

In Bezug auf die Fluoreszenzfarbstoffe gemäß den Formeln (I) bis (IX) kann in bevorzugten Ausführungsformen vorgesehen sein, dass weitere aromatische Ringe an die Fluoreszenzfarbstoff Moleküle ankondensiert sein können.

In weiter bevorzugten Ausführungsformen sind Redox-Puffer umfassend Reduktionsmittel und Oxidationsmittel verwendbar zur Verbesserung der Photostabilität und/oder Fluoreszenzintensität von Pyronin-Fluoreszenzfarbstoffen, insbesondere Rosaminen.

In noch bevorzugten Ausführungsformen sind Redox-Puffer umfassend Reduktionsmittel und Oxidationsmittel verwendbar zur Verbesserung der Photostabilität und/oder Fluoreszenzintensität von Coumarin-Fluoreszenzfarbstoffen.

In weiter bevorzugten Ausführungsformen sind Redox-Puffer umfassend wenigstens ein Reduktionsmittel, und/oder wenigstens ein Oxidationsmittel und/oder wenigstens ein Reduktions-Oxidations-Mittel verwendbar zur Einstellung des Fluoreszenzzustandes von Fluorescein-Fluoreszenzfarbstoffen gemäß der allgemeinen Formel (I), Rhodamin-Fluoreszenzfarbstoffen gemäß der Formel (II), Carborhodamin-Fluoreszenzfarbstoffen gemäß der Formel (III), Oxazin-Fluoreszenzfarbstoffen gemäß der Formeln (IV) oder (V), Cyanin-Fluoreszenzfarbstoffen gemäß der Formeln (VI) und (VIII), Indolcyanin-Fluoreszenzfarbstoffen gemäß der Formeln (VII) und (IX), Pyronin-Fluoreszenzfarbstoffen und/oder Coumarin-Fluoreszenzfarbstoffen.

In bevorzugten Ausführungsformen weist der Fluoreszenzfarbstoff eine chemische Modifikation auf und/oder ist an ein Biomolekül gebunden, wobei das Biomolekül bevorzugt ausgewählt ist aus der Gruppe umfassend Proteine, Peptide, Antikörper und/oder Nukleinsäuren.

Vorzugsweise ist der Fluoreszenzfarbstoff durch eine chemische Modifikation funktionalisiert. Der Begriff "funktionalisiert" hat im Sinne dieser Erfindung die Bedeutung, dass der Fluoreszenzfarbstoff weitere chemische Modifikationen wie funktionelle Gruppen aufweist.

Bevorzugt sind insbesondere wasserlösliche Derivate der Fluoreszenzfarbstoffe. Die Wasserlöslichkeit kann beispielsweise durch Einführung von hydrophilen oder aziden Gruppen, vorzugsweise durch Einführen von Carboxylgruppen und/oder Sulfonsäuregruppen in das Fuoreszenzfarbstoffmolekül verbessert werden. Eine Verbesserung der Wasserlöslichkeit kann auch durch Glykierung, einer Einführung von Sacchariden, insbesondere einer Glykosylierung, erreicht werden. Bevorzugt sind insbesondere glykierte vorzugsweise glykosylierte oder sulfonierte Derivate von Fluoreszenzfarbstoffen.

Bevorzugt sind weiterhin chemisch aktivierte Derivate der Fluoreszenzfarbstoffe, die durch Einführen einer reaktiven chemischen Gruppe eine Bindung an andere Moleküle vermitteln können. Eine solche Aktivierung kann beispielsweise durch Einführen von Amino-, Thiol-, Sulfhydryl und/oder Carboxylgruppen erfolgen. Bevorzugt sind insbesondere Derivate von Fluoreszenzfarbstoffen, die Amino-, Thiol-, Sulfhydryl und/oder Carboxylgruppen aufweisen.

Vorzugsweise sind eine kovalente Bindung an Moleküle insbesondere Biomoleküle vermittelnde chemische Gruppen ausgewählt aus der Gruppe umfassend Maleimide, N-Hydroxy-succinimid und/oder N-Hydroxy-succinimidester, insbesondere Methyl-, Ethyl- und/oder Propylester, N-Hydroxy-phthalimid, und/oder N-Hydroxy-phthalimidester, insbesondere Methyl-, Ethyl- und/oder Propylester.

Diese chemischen Gruppen erlauben es, Fluoreszenzfarbstoffe kovalent an organische, anorganische, natürliche oder synthetische Moleküle, insbesondere Biomoleküle, oder an Polymere zu binden. Insbesondere N-Hydroxy-succinimid und N-Hydroxy-phthalimid können den Vorteil zur Verfügung stellen, dass diese eine kovalente Bindung zwischen dem Fluoreszenzfarbstoff und dem Biomolekül ausbilden können, wobei die Gruppe abgespalten wird. Vorzugsweise können kovalente Bindungen zu Peptiden und Proteinen ausgebildet werden.

Bevorzugt sind insbesondere N-Hydroxy-succinimidester der Fluoreszenzfarbstoffe, biotinylierte Fluoreszenzfarbstoffe oder Maleimide der Fluoreszenzfarbstoffe, insbesondere N-Hydroxy-succinimidester der Indolcyanin-Fluoreszenzfarbstoffe. Ganz besonders bevorzugt sind N-Hydroxy-succinimidester der Dicarbocyanin Indolcyanin-Fluoreszenzfarbstoffe, beispielsweise Dicarbocyanin-5,5'-disulfonatkaliumsalz-N-hydroxysuccinimidester (Cy5).

Der Fluoreszenzfarbstoff kann zur Vermittlung einer Bindung an weitere Moleküle weiterhin reaktive Gruppen ausgewählt aus der Gruppe umfassend Isothiocyanate, Isocyanate, Monochlortriazine, Dichlortriazine, Aziridine, Sulfonylhalogenide, Imido-Ester, Glyoxal oder Aldehyd- und Hydroxy-Funktionen, Iodacetamid-Funktionen, und/oder Phosphoramidite aufweisen.

Weiter bevorzugt kann der Fluoreszenzfarbstoff biotinyliert oder farnelysiert sein.

Der Fluoreszenzfarbstoff kann an natürliche oder synthetische Moleküle, beispielsweise biodegradierbare Polymere, insbesondere an Biomoleküle gebunden sein.

Unter Biomolekülen sind im Sinne der vorliegenden Erfindung insbesondere Proteine, Peptide, Oligomere, Nukleinsäuren insbesondere DNA und/oder RNA, Antikörper, kleine organische Moleküle mit biologischer Wirkung, Kohlenhydrate, Fette, Arzneistoffe oder auch Zellen zu verstehen, wobei das Biomolekül bevorzugt ausgewählt ist aus der Gruppe umfassend Proteine, Peptide, Antikörper und/oder Nukleinsäuren.

Eine Bindung des Fluoreszenzfarbstoffs insbesondere mit Biomolekülen kann beispielsweise auf einer kovalenten oder nicht-kovalenten Wechselwirkung, Konjugation, Adsorption, Assoziierung oder einer anderen Art der Bindung beruhen. Bevorzugt ist der Fluoreszenzfarbstoff über eine kovalente Bindung an ein Biomolekül gebunden. Der Fluoreszenzfarbstoff bildet bevorzugt mit DNA oder Antikörpern ein Konjugat aus.

Mit Fluoreszenzfarbstoffen markierte Biomoleküle sind in analytischen und diagnostischen Methoden in Biochemie und Medizin, insbesondere in molekularbiologischen Assays und in der medizinischen Diagnostik vielfach verwendbar. Menge oder Intensität eines Fluoreszenzsignals können beispielsweise Vorhandensein und/oder Menge eines Biomoleküls bestimmbar machen.

In vorteilhafter Weise können Fluoreszenzfarbstoffe insbesondere an Antikörper konjugiert werden und sind beispielsweise in der Flow Cytometrie verwendbar. An Antikörper gebundene Fluoreszenzfarbstoffe sind weiter verwendbar als Fluoreszenzsonden zur spezifischen Markierung in der Immunologie. Insbesondere Fluorescein- und Rhodamin-Fluoreszenzfarbstoffe sind geeignet, an Antikörper konjugiert zu werden. Der Fluoreszenzfarbstoff kann auch an Träger für Fluoreszenzfarbstoffe, beispielsweise an kolloidale Polymerpartikel oder Nanopartikel gebunden sein, beispielsweise für eine Anwendung der Fluoreszenzfarbstoff im Menschen durch intravenöse oder orale Administration.

Fluoreszenzfarbstoffe sind weiter als Marker verwendbar, um biologische Substanzen, wie Proteine, Peptide oder DNA zu markieren. An Nukleinsäuren gebundene Fluoreszenzfarbstoffe finden beispielsweise Verwendung in Nukleinsäureassays, bei der automatischen Sequenzierung von DNA oder RNA, oder für die Detektion von Nukleinsäuren beispielsweise auf Gen-Chips oder DNA-Arrays. An Proteine, Peptide oder Oligomere gebundene Fluoreszenzfarbstoffe finden beispielsweise Verwendung für die Detektion auf Protein-Chips.

Fluoreszenzfarbstoffe können weiterhin beispielsweise so genannte Calciumfarbstoffe oder Indikatorfarbstoffe sein, die zur Detektion von organischen oder anorganischen Molekülen oder Biomolekülen verwendbar sind.

Ein weiterer Gegenstand der vorliegenden Erfindung betrifft die Verwendung eines erfindungsgemäßen Redox-Puffers umfassend wenigstens ein Reduktionsmittel und wenigstens ein Oxidationsmittel oder ein Reduktions-Oxidations-Mittel zur Verbesserung der Photostabilität und/oder Fluoreszenzintensität eines Fluoreszenzfarbstoffs.

Es ist von besonderem Vorteil, dass die Verwendung eines erfindungsgemäßen Redox-Puffers beispielsweise in molekularbiologischen Assays und in der medizinischen Diagnostik durch die zur Verfügung gestellte Verbesserung der Photostabilität des Fluoreszenzfarbstoffs eine Verlängerung der Messzeit zur Verfügung stellen kann. Messungen über längere Zeiträume ermöglichen insbesondere eine Verfolgung von zeitabhängigen Vorgängen, insbesondere biologischen Vorgängen unter Beteiligung fluoreszenzmarkierter Biomoleküle. Weiterhin kann eine Verwendung eines erfindungsgemäßen Redox-Puffers durch die zur Verfügung gestellte Verbesserung der Fluoreszenzintensität des Fluoreszenzfarbstoffs die Messempfindlichkeit erhöhen. Dies ermöglicht genauere, höher aufgelöste Messungen.

Insbesondere ist es von Vorteil, dass die Haltbarkeit von Proben beispielsweise von mit Fluoreszenzfarbstoff markierten biologischen Proben verlängert sein kann. Dies ermöglicht beispielsweise diese zu einem späteren Zeitpunkt erneut vermessen zu können.

Ein ganz besonderer Vorteil kann dadurch zur Verfügung gestellt werden, dass niedrigere Dosen der Fluoreszenzfarbstoffe als Marker verwendbar sind. Dies ist insbesondere von Vorteil, da Fluoreszenzfarbstoffe unter Umständen mit biologischen Funktionen interferieren oder toxisch sein können.

Ein weiterer Gegenstand der vorliegenden Erfindung betrifft die Verwendung von Redox-Puffern umfassend wenigstens ein Reduktionsmittel, und/oder wenigstens ein Oxidationsmittel und/oder wenigstens ein Reduktions-Oxidations-Mittel zur Einstellung des Fluoreszenzzustandes von Fluoreszenzfarbstoffen.

Die Verwendung von Redox-Puffern umfassend Reduktionsmittel und/oder Oxidationsmittel zur Einstellung des Fluoreszenzzustandes von Fluoreszenzfarbstoffen insbesondere zur kontrollierten Einstellung der "Aus-" und "An"-Zeiten von Fluoreszenzfarbstoffen hat große Vorteile. So wird die Synthese und Bereitstellung optisch schaltbarer Farbstoffe heutzutage als Schlüsselgebiet der zukünftigen Fluoreszenzmikroskopie angesehen. In vorteilhafter Weise eröffnet sich durch Verwendung erfindungsgemäßer Redox-Puffer umfassend Reduktionsmittel und/oder Oxidationsmittel die Möglichkeit verschiedenste organische Farbstoffe zur hoch aufgelösten Fluoreszenzmikroskopie unterhalb der Beugungsgrenze mit Hilfe der Lokalisations- Mikroskopie, beispielsweise der STORM- (stochastic optical reconstruction microscopy), PALM- (photoactivated localization microscopy) oder FPLAM-(fluorescence photoactivated localization microscopy) Mikroskopie oder auch zur DSOM-(dynamic saturation optical microscopy) Mikroskopie einzusetzen.

Insbesondere sind Redox-Puffer umfassend wenigstens ein Reduktionsmittel, und/oder wenigstens ein Oxidationsmittel und/oder wenigstens ein Reduktions-Oxidations-Mittel verwendbar zur Erhöhung der optischen Auflösung von Bild gebenden Fluoreszenzmikroskopieverfahren.

Ein weiterer Gegenstand betrifft eine Fluoreszenzfarbstoff-Zusammensetzung enthaltend einen Fluoreszenzfarbstoff und einen Redox-Puffer umfassend wenigstens ein Reduktionsmittel, und/oder wenigstens ein Oxidationsmittel und/oder wenigstens ein Reduktions-Oxidations-Mittel.

Noch ein Gegenstand betrifft photostabilisierte Fluoreszenzfarbstoff-Zusammensetzung enthaltend einen Fluoreszenzfarbstoff und einen erfindungsgemäßen Redox-Puffer umfassend wenigstens ein Reduktionsmittel und wenigstens ein Oxidationsmittel oder ein Reduktions-Oxidations-Mittel.

Photostabilisierte Fluoreszenzfarbstoff-Zusammensetzungen enthaltend einen Fluoreszenzfarbstoff und einen erfindungsgemäßen Redox-Puffer umfassend wenigstens ein Reduktionsmittel und wenigstens ein Oxidationsmittel oder ein Reduktions-Oxidations-Mittel sind beispielsweise verwendbar in molekularbiologischen Assays und in der medizinischen Diagnostik. Erfindungsgemäße Fluoreszenzfarbstoff-Zusammensetzungen können durch die Wirkung des erfindungsgemäßen Redox-Puffers besonders photostabil sein und/oder können eine erhöhte Fluoreszenzintensität zur Verfügung stellen. Zur Beschreibung geeigneter Fluoreszenzfarbstoffe und geeigneter Redox-Puffer wird in vollem Umfang auf die vorstehende Beschreibung Bezug genommen.

Die Fluoreszenzfarbstoff-Zusammensetzungen enthält einen oder mehrere Fluoreszenzfarbstoffe und Redox-Puffer umfassend wenigstens ein Reduktionsmittel und wenigstens ein Oxidationsmittel oder wenigstens ein Reduktions-Oxidations-Mittel in wässrigen oder organischen Lösungsmitteln, bevorzugt in einem wässrigen Lösungsmittel, besonders bevorzugt in Wasser. In wässrigen Lösungsmitteln sind geeignete Redox-Puffer besonders gut lösbar, weiterhin werden wässrige Lösungsmittel häufig in Fluoreszenzassays verwendet.

Weiterhin sind photostabilisierte Fluoreszenzfarbstoff-Zusammensetzungen besonders vorteilhaft verwendbar bei der in vitro Fluoreszenzmikroskopie und Fluoreszenzmessungen von Biomolekülen oder biologischen Proben.

Erfindungsgemäß sind photostabilisierte Fluoreszenzfarbstoff-Zusammensetzungen und deren Verwendung bevorzugt, bei denen die Konzentration des Redox-Puffers im Bereich von ≥ 0,2 mM bis ≤ 10 mM, bevorzugt im Bereich von ≥ 1 mM bis ≤ 5 mM, besonders bevorzugt im Bereich von ≥ 2 mM bis ≤ 3 mM, liegt. Diese Konzentrationen sind besonders bevorzugt, wenn das Farbstoffprodukt den oder die Fluoreszenzfarbstoffe und den Redox-Puffer in einem wässrigen Lösungsmittel enthält, insbesondere in Wasser. Weiterhin sind photostabilisierte Fluoreszenzfarbstoff-Zusammensetzungen und deren Verwendung bevorzugt, bei denen die Konzentration des Fluoreszenzfarbstoffs im Bereich von ≥ 100 pM bis ≤ 100 µM, bevorzugt im Bereich von ≥ 1 µM bis ≤ 10 µM, besonders bevorzugt im Bereich von ≥ 2 µM bis ≤ 5 µM liegt.

In bevorzugten Ausführungsformen umfasst die Fluoreszenzfarbstoff-Zusammensetzung insbesondere die photostabilisierte Fluoreszenzfarbstoff-Zusammensetzung den Sauerstoffgehalt verringernde Substanzen vorzugsweise ausgewählt aus der Gruppe umfassend Glukoseoxidase, Katalase und/oder Glukose. Zur Beschreibung geeigneter den Sauerstoffgehalt verringernde Substanzen wird in vollem Umfang auf die vorstehende Beschreibung Bezug genommen.

Photostabilisierte Fluoreszenzfarbstoff-Zusammensetzungen enthaltend einen Fluoreszenzfarbstoff und einen erfindungsgemäßen Redox-Puffer umfassend wenigstens ein Reduktionsmittel und wenigstens ein Oxidationsmittel oder ein Reduktions-Oxidations-Mittel sind in weiter bevorzugten Ausführungsformen verwendbar in der Photographie, wo sie als Sensibilisatoren eingesetzt werden können, oder in organischen Farbstofflasern. Beispielsweise sind photostabilisierte Fluoreszenzfarbstoff-Zusammensetzungen für Farbstofflaser oder als Referenzlösung für mikroskopische und spektroskopische Zwecke verwendbar.

Insbesondere sind photostabilisierte Fluoreszenzfarbstoff-Zusammensetzungen in der Fluoreszenzmikroskopie verwendbar. Weitere Anwendungsmöglichkeiten liegen im Bereich der konfokalen Fluoreszenzmikroskopie. Bei der konfokalen Fluoreszenzmikroskopie ist aufgrund der hohen Laserlichtintensitäten die Photostabilität von Fluoreszenzfarbstoffen von besonderer Bedeutung. Durch konfokalen Fluoreszenzmikroskopie sind insbesondere mit Fluoreszenzfarbstoffen markierte biologische Proben untersuchbar, wobei die Zugabe eines photostabilisierenden Redox-Puffers die Zeit verlängern kann, während der mit einen Fluoreszenzfarbstoff markierte biologischen Proben untersucht werden können.

Weiterhin sind erfindungsgemäße photostabilisierte Fluoreszenzfarbstoff-Zusammensetzungen verwendbar im Bereich der Wirkstoffforschung, im High-Throughput-Screening, wobei eine erhöhte Photostabilität besonders bei einer Verwendung fokussierten Laserlichts vorteilhaft verwendbar ist.

Weiterhin sind erfindungsgemäße photostabilisierte Fluoreszenzfarbstoff-Zusammensetzungen vorzugsweise verwendbar als Referenzlösungen zur Kalibrierung und Optimierung, bei denen eine hohe Photostabilität einer Standardlösung eines Fluoreszenzfarbstoffs den Vorteil erhöhter Verlässlichkeit und erhöhter Reproduzierbarkeit der Messergebnisse zur Verfügung stellen kann.

Von besonderem Vorteil ist die Verwendung photostabilisierter Fluoreszenzfarbstoff-Zusammensetzungen in der Einzelmolekülspektroskopie. Insbesondere in der Einzelmolekülspektroskopie ist es von großem Vorteil, dass eine Verbesserung der Photostabilität eines Fluoreszenzfarbstoffs durch einen Redox-Puffer eine längere Beobachtung eines einzelnen Moleküls erlaubt. Weiterhin ist insbesondere bei der Beobachtung einzelner Moleküle, also einzelner Fluoreszenzsignale, eine Verbesserung der Fluoreszenzintensität eines Fluoreszenzfarbstoffs von immensem Vorteil. Von großem Vorteil bei einer Verwendung der erfindungsgemäßen Redox-Puffer in der Einzelmolekülspektroskopie ist weiterhin, dass erfindungsgemäße Redox-Puffer Intensitätsfluktuationen, das "Blinken", reduzieren können. Dies stellt den großen Vorteil zur Verfügung, dass einzelne Moleküle ohne größere Unterbrechung ihrer Fluoreszenz beobachtbar sind.

Ein weiterer Gegenstand der Erfindung ist ein Kit, der zur Durchführung des Verfahrens zur Verbesserung der Photostabilität und/oder Fluoreszenzintensität eines Fluoreszenzfarbstoffs geeignet ist. Der Kit enthält wenigstens einen Fluoreszenzfarbstoff und einen Redox-Puffer umfassend wenigstens ein Reduktionsmittel und wenigstens ein Oxidationsmittel oder wenigstens ein Reduktions-Oxidations-Mittel.

In bevorzugten Ausführungsformen enthält der Kit wenigstens ein Reagenz umfassend einen Fluoreszenzfarbstoff und wenigstens ein Reagenz umfassend einen Redox-Puffer umfassend wenigstens ein Reduktionsmittel und wenigstens ein Oxidationsmittel oder wenigstens ein Reduktions-Oxidations-Mittel. Der Kit kann auch ein Reagenz enthaltend ein Gemisch verschiedener Reduktionsmittel und/oder Oxidationsmittel umfassen. Der Kit kann weiterhin ein Reagenz umfassend einen Fluoreszenzfarbstoff und mehrere, beispielsweise zwei Reagenzien umfassend jeweils wenigstens ein Reduktionsmittel und wenigstens ein Oxidationsmittel umfassen, die nach Vermischen einen Redox-Puffer ausbilden. Ferner kann der Kit den Sauerstoffgehalt verringernde Substanzen enthalten, vorzugsweise ausgewählt aus der Gruppe umfassend Glukoseoxidase, Katalase und/oder Glukose. Der Kit kann weiterhin eine erfindungsgemäße photostabilisierte Fluoreszenzfarbstoff-Zusammensetzung umfassen.

Es kann auch vorgesehen sein, dass der Kit ein Reagenz enthält, das wenigstens einen Fluoreszenzfarbstoff, der eine chemische Modifikation aufweist und/oder an ein Biomolekül gebunden ist, wobei das Biomolekül bevorzugt ausgewählt ist aus der Gruppe umfassend Proteine, Peptide, Antikörper und/oder Nukleinsäuren, umfasst. Der Kit kann weiterhin Puffer und/oder Lösemittel enthalten, die zur Durchführung des Verfahrens benötigt werden. Es kann auch vorgesehen sein, dass der Kit eine Detektionseinheit umfasst.

Ein noch weiterer Gegenstand der Erfindung ist ein Kit, der zur Durchführung des Verfahrens zur Einstellung des Fluoreszenzzustandes eines Fluoreszenzfarbstoffs geeignet ist. Der Kit enthält wenigstens einen Fluoreszenzfarbstoff und einen Redox-Puffer umfassend wenigstens ein Reduktionsmittel, und/oder wenigstens ein Oxidationsmittel und/oder wenigstens ein Reduktions-Oxidations-Mittel.

Wenn nicht anders ausgeführt, weisen die verwendeten technischen und wissenschaftlichen Ausdrücke die Bedeutung auf, wie sie gemeinhin von einem Durchschnittsfachmann in dem Gebiet, zu dem diese Erfindung gehört, verstanden werden.

Alle Veröffentlichungen, Patentanmeldungen, Patente und weiteren hier angegebenen Literaturangaben sind voll inhaltlich durch Bezugnahme aufgenommen.

Beispiele und Figuren, die der Veranschaulichung der vorliegenden Erfindung dienen, sind nachstehend angegeben.

In den Figuren zeigt:

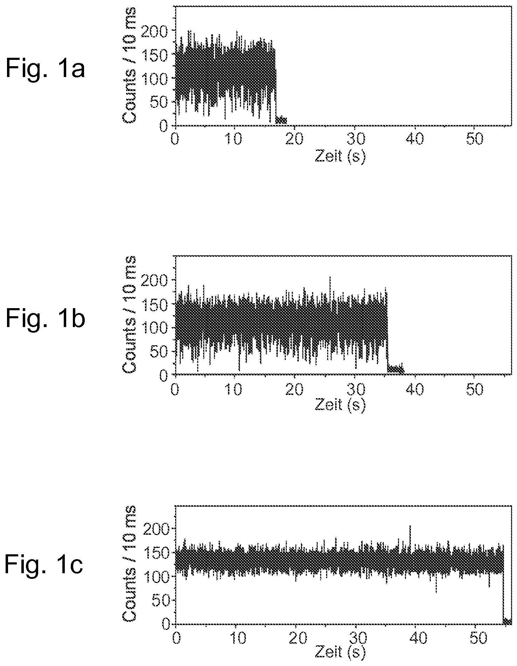

- Fig. 1a: die Erhöhung der Photostabilität des Cyanin-Fluoreszenzfarbstoffs Cy5 durch das Oxidationsmittel Methylviologen,
- Fig. 1b: die Erhöhung der Photostabilität des Cyanin-Fluoreszenzfarbstoffs Cy5 durch das Reduktionsmittel Trolox®,
- Fig. 1c: die Erhöhung der Photostabilität des Cyanin-Fluoreszenzfarbstoffs Cy5 durch den erfindungsgemäßen Redox-Puffer, jeweils bestimmt durch Einzelmolekül-Fluoreszenzmessung des an DNA gekoppelten Fluoreszenzfarbstoffs.

### Beispiel 1

### Bestimmt wurde die Einzelmolekül-Fluoreszenzmessung eines an DNA gekoppelten Cyanin-Fluoreszenzfarbstoffs, wobei die Immobilisierung der DNAs und die

Einzelmolekülmessungen erfolgten wie in "Heilemann, M.; Kasper, R.; Tinnefeld, P.; Sauer, M. J Am Chem Soc 2006, 128, 16864-16875" und "Tinnefeld, P.; Buschmann, V.; Weston, K. D.; Biebricher, A.; Herten, D.-P.; Piestert, O.; Heinlein, T.; Heilemann, M.; Sauer, M. Rec. Res. Dev. Phys. Chem. 2004, 7, 95-125" beschrieben, wenn im Folgenden nicht abweichend angegeben.

Biotinylierte einzelsträngige Oligonukleotide (60 Basen, 5'-ATC GTT ACC AAA GCA TCG TAA ATC GCA TAA TAG CAC GTT AAT TTA GCA CGG ACG ATC GCC-3'-biotin, SEQ ID No 1, IBA, Göttingen) wurden mittels Standard-NHS-Esterchemie mit dem N-hydroxysuccinimidylester (NHS-Ester) des Cyanin-Fluoreszenzfarbstoffs Cy5 (Amersham Biosciences Europe, Freiburg) markiert. Hierzu wurden zu 10 nMol des Oligonukleotids gelöst in 0,1 M Carbonatpuffer (pH=9,4, Carbonatpuffer, Merck, Darmstadt) ein fünffacher Überschuss von 50 nMol NHS-Ester des Cyanin-Fluoreszenzfarbstoffs Cy5 zugegeben und für 6 Stunden in Dunkelheit inkubiert.

Die markierten Oligonukleotide wurden anschließend mittels HPLC (Hewlett Packard, Böblingen), über eine reversed-phase-Säule (Knauer, Berlin) gepackt mit Octadecylsilanhypersil C18 aufgereinigt. Die Trennung erfolgte in 0,1 M Triethylammoniumacetat, unter Verwendung eines linearen Gradienten von 0 % bis 75 % Acetonitril für 20 Minuten. Die Ausbeute betrug ca. 85%.

Die einzelsträngigen Oligonukleotide, die den Cyanin-Fluoreszenzfarbstoff Cy5 am 5'-Ende und einen Biotinlinker am 3'-Ende enthalten wurden anschließend mit dem komplementären DNA-Strang (IBA, Göttingen) hybridisiert. Nach kurzem Aufheizen auf 95°C wurde die Probe innerhalb einer Minute auf 65°C abgekühlt und anschließend langsam innerhalb von 2 Stunden auf 4°C weiter abgekühlt. Die doppelsträngige DNA wurde anschließend aus einer 10 nanomolaren Lösung an Streptavidin-beschichtete Glasoberflächen immobilisiert wie in "Heilemann, M.; Kasper, R.; Tinnefeld, P.; Sauer, M. J Am Chem Soc 2006, 128, 16864-16875" beschrieben.

Zu dem an DNA immobilisierten Cyanin-Fluoreszenzfarbstoff wurde anschließend eine Lösung des Redox-Puffers enthaltend 0,5 mM des Oxidationsmittels Methylviologen und 1,8 mM des Reduktionsmittels Trolox® sowie Sauerstoff-entfernende Enzyme gegeben. Diese Lösung wurde hergestellt, indem 940 µl Lösung einer Lösung enthaltend das Reduktionsmittel sowie Substrate für die Sauerstoff-entfernenden Enzyme, 10% (wt./vol.) Glukose (Sigma-Aldrich, Deutschland), 12,5% (vol/vol) Glycerol (Sigma-Aldrich, Deutschland), 2,5 mM 6-Hydroxy-2,5,7,8-Tetramethylchroman-2-carbonsäure (Trolox®, Sigma-Aldrich, Deutschland) in PBS (pH 7,4, Sigma-Aldrich, Deutschland), vorgelegt wurden. Zu dieser Lösung wurden 1 µl einer 1 mol/1-Lösung Methylviologen (Sigma-Aldrich, Deutschland) in PBS gegeben. Anschließend wurden 60 µl einer die Sauerstoff-entfernenden Enzyme enthaltenden Lösung, 50-100 µg/ml Glukoseoxidase (Sigma-Aldrich, Deutschland), 100-200 µg/ml Katalase (Sigma-Aldrich, Deutschland), 0,4-0,8 mmol/l TCEP (Tris[2-carboxyethyl]phosphine hydrochlorid, Sigma-Aldrich, Deutschland) in PBS hinzu gegeben. Die Probe wurde sofort nach der Zugabe der Lösung luftdicht abgeschlossen.

In parallelen Messungen wurden entsprechende Lösungen enthaltend 1 mM des Oxidationsmittels Methylviologen oder 1,8 mM des Reduktionsmittels Trolox® verwendet.

Die Einzelmolekül-Fluoreszenzmessung wurden in Apparatur durchgeführt wie insbesondere in "Tinnefeld, P.; Buschmann, V.; Weston, K. D.; Biebricher, A.; Herten, D.-P.; Piestert, O.; Heinlein, T.; Heilemann, M.; Sauer, M. Rec. Res. Dev. Phys. Chem. 2004, 7, 95-125" beschrieben. Der Laserstrahl eines 635 nm-Diodenlasers (PicoQuant, Deutschalnd) wurde mit einem Ölimmersionsobjektiv (100×, NA 1.45; Zeiss) durch einen dichroitischen Strahlteiler (650 DRLP, AHF Analysentechnik, Deutschland) gekoppelt. Die Fluoreszenz wurde durch das gleiche Objektiv gesammelt und räumlich durch eine 100 µm-Lochblende in der Bildebene des Mikroskops (Axiovert 200 M, Zeiss) gefiltert. Das Fluoreszenzsignal wurde durch einen dichroitischen Strahlteiler (680 DRLP) auf zwei Detektionskanäle aufgeteilt und auf der aktiven Fläche von zwei Lawinenphotodioden (APD; AQR-14; EG&G, Kanada) sichtbar gemacht.

Wie in der Figur 1a gezeigt ist, konnte festgestellt werden, dass eine Zugabe von 1 mM des Oxidationsmittels Methylviologen alleine eine Lebensdauer der Fluoreszenz von etwas mehr als 15 Sekunden bewirkt. Figur 1b zeigt, dass eine Zugabe von 1,8 mM des Reduktionsmittels Trolox® alleine eine Lebensdauer der Fluoreszenz von ca. 35 Sekunden bewirkt.

Figur 1c zeigt, dass eine Zugabe des Redox-Puffers enthaltend 1,8 mM des Reduktionsmittels Trolox® und 0,5 mM des Oxidationsmittels Methylviologen eine Lebensdauer der Fluoreszenz von fast 55 Sekunden erzeugte. Die Photostabilität konnte gegenüber einer Verwendung von Reduktionsmitteln oder Oxidationsmittel alleine deutlich erhöht werden. Aus der wesentlich schmaleren Bandbreite der Messung ergibt sich weiterhin, dass die Intensitätsfluktuationen deutlich verringert wurden.

### Beispiel 2

### Einzelmolekül-Fluoreszenzmessung eines an DNA immobilisierten Carborhodamin-Fluoreszenzfarbstoffs

Die Bestimmung erfolgte wie unter Beispiel 1 beschrieben, wobei der Carborhodamin-Fluoreszenzfarbstoff ATTO647N (ATTO-TEC, Siegen) verwendet wurde.

Es konnte festgestellt werden, dass eine Zugabe von 1 mM des Oxidationsmittels Methylviologen alleine eine Lebensdauer der Fluoreszenz von etwas mehr als 20 Sekunden bewirkt, während eine Zugabe von 1,8 mM des Reduktionsmittels Trolox® alleine eine Lebensdauer der Fluoreszenz von ca. 70 Sekunden bewirkt.

Demgegenüber erzeugte eine Zugabe des Redox-Puffers enthaltend 1,8 mM des Reduktionsmittels Trolox® und 0,5 mM des Oxidationsmittels Methylviologen eine Lebensdauer der Fluoreszenz von fast 20 Minuten erzeugte.

Die Photostabilität konnte gegenüber einer Verwendung von Reduktionsmitteln oder Oxidationsmittel alleine sehr deutlich erhöht werden.

### Beispiel 3

### Messungen der Photostabilität eines Cyanin-Fluoreszenzfarbstoffs in Lösung

Die Messung erfolgte in Lösung enthaltend einen Redox-Puffer umfassend als Reduktionsmittel 3 mM Trolox® und als Oxidationsmittel 3 mM Methylviologen. Die Messung erfolgte, ohne dass Sauerstoff-entfernende Enzyme zugesetzt wurde.

Eine entsprechende Lösung wurde hergestellt, indem 940 µl einer Lösung enthaltend 3 mM 6-Hydroxy-2,5,7,8-Tetramethylchroman-2-carbonsäure (Trolox®, Sigma-Aldrich) in PBS (pH 7,4, Sigma-Aldrich), in einer verschließbaren Quartzküvette vorgelegt wurden. Zu dieser Lösung wurden 1 µl einer 3 M-Lösung Methylviologen (Sigma-Aldrich) in PBS gegeben. Im Anschluss wurden 0,1 µM des Cyanin-Fluoreszenzfarbstoffs Cy5 (Amersham Biosciences Europe, Freiburg) zugegeben. Die Küvette wurde sofort nach der Zugabe der Lösung luftdicht verschlossen.

In parallelen Messungen wurden entsprechende Lösungen enthaltend 3 mM des Oxidationsmittels Methylviologen oder 3 mM des Reduktionsmittels Trolox® sowie eine Lösung enthaltend lediglich 0,1 µM des Cyanin-Fluoreszenzfarbstoffs Cy5 verwendet.

Die Messung der Fluoreszenz erfolgte bei einer Anregung mit Wellenlängen von 488 nm oder 647 nm mit einem Ar-Kr-Laser (Spectra-Physics, Deutschland). Die Wegstrecke der Küvette betrug 10 mm.

Es konnte festgestellt werden, dass der verwendete Redox-Puffer eine ca. 2,6 fache Verbesserung der Photostabilität gegenüber der Lösung des Fluoreszenzfarbstoffs in PBS erzielte, während das Reduktionsmittels alleine eine ca. 1,6 fache Verbesserung der Photostabilität verursachte.

Dies zeigt, dass eine Verwendung des Redox-Puffers eine deutliche Verbesserung der Photostabilität in Anwesenheit von Sauerstoff erzielen kann.

### Beispiel 4

### Bestimmt wurde die Länge des Dunkelzustands eines an DNA gekoppelten Cyanin-Fluoreszenzfarbstoffs in einer Einzelmolekül-Fluoreszenzmessung

Hierbei erfolgte die Immobilisierung der DNAs wie unter Beispiel 1 beschrieben, wobei abweichend die doppelsträngige DNA den Cyanin-Fluoreszenzfarbstoff Cy5 (GE Healthcare) am 5'-Ende und einen Biotinlinker am 3'-Ende enthaltende DNA aus einer 10 nanomolaren Lösung an Streptavidin (Roche)-beschichtete und mit BSA (Bovine Serum Albumin, vom Rind) passivierte Glasoberflächen immobilisiert wurde wie in "Heilemann, M.; Kasper, R.; Tinnefeld, P.; Sauer, M. J Am Chem Soc 2006, 128, 16864-16875" beschrieben.

Zu dem an DNA immobilisierten Cyanin-Fluoreszenzfarbstoff wurden anschließend 400 µl einer Sauerstoff-entfernenden Enzyme enthaltenden Lösung, enthaltend 50-100 µg/ml Glukoseoxidase (Sigma-Aldrich, Deutschland), 100-200 µg/ml Katalase (Sigma-Aldrich, Deutschland), 10% (wt/vol) Glukose (Sigma-Aldrich, Deutschland) und 0,1 mM Tris(2-carboxyethyl)phosphin-Hydrochlorid in PBS hinzu gegeben. Zu dieser Lösung wurden anschließend 1 µl einer Lösung des Redox-Puffers für eine 1 mM Entkonzentration des Reduktionsmittels Ascorbinsäure gegeben. Die Probe wurde sofort nach der Zugabe der Lösungen luftdicht abgeschlossen.

Durch die Zugabe von 1 mM des Reduktionsmittels Ascorbinsäure wurde eine Dauer des nicht fluoreszierenden "Aus"-Zustand des Fluoreszenzfarbstoffs Cy5 von ca. 55 ms gezielt eingestellt.

Die Einzelmolekül-Fluoreszenzmessung wurden mit totaler interner Reflexion auf einem inversen Fluoreszenz-Mikroskop (Olympus, Objektiv NA 1.49) durchgeführt. Die Probe wurde mit 100 mW über einen Ar⁺Kr⁺ Laser (Spectra Physics) bei 647 nm über totale interne Reflexion angeregt. Die Detektion fand mit Hilfe eines EMCCD (electron multiplying CCD)-Detektors (Andor IXon+ DU 897) statt. Dabei wurden 200 bis 1000 frames im frame-transfer Modus bei einer Integrationszeit von 8 ms aufgenommen. Ein Pixel entsprach 75 nm × 75 nm.

Die Daten der Kamera wurden mit Hilfe einer selbstentwickelten LabView-Routine ausgewertet. Dabei wurden in jedem Bild des Films alle zu diesem Zeitpunkt aktiv emittierenden Moleküle über eine effiziente Bildauswertung (Punkterkennung) gefunden. Hierbei wurde sowohl die Form der Punkte, ihre Helligkeit als auch die Qualität der Positionieranpassung benutzt, um etwaige Doppelereignisse, dass zwei Farbstoffmoleküle gleichzeitig aktiv sind, auszuschließen. Die Position jedes Moleküls in jedem Bild wurde über eine zweidimensionale Gaußanpassung bestimmt. Diese Positionen wurden anschließend in einer Matrix mit 15 nm × 15 nm Rasterung histogrammiert und derart in hochaufgelöste Bilder rekonstruiert.

Ein aus den Einzelmoleküllokalisationen rekonstruiertes gemitteltes Bild über den gesamten Film mit 15 nm/Pixel zeigte deutlich, dass die Moleküle separiert voneinander erschienen.

In einem entsprechenden Vergleichsversuch ohne Zugabe einer Lösung des Redox-Puffers enthaltend 1 mM des Reduktionsmittels Ascorbinsäure betrug die Dauer des nicht fluoreszierenden "Aus"-Zustand des Fluoreszenzfarbstoffs Cy5 ca. 5 ms.

Ein entsprechendes konventionelles Weitfeldfluoreszenzbild zeigte deutlich, dass die Moleküle mit konventioneller Mikroskopie nicht auflösbare Bilder ergaben.

## Patentansprüche

1. Verfahren zur Verlängerung der Zeitspanne, während der ein Fluoreszenzfarbstoff ausgewählt aus der Gruppe umfassend Rhodamine, Carborhodamine, Oxazin- und/oder Cyaninfarbstoffe im nicht fluoreszierenden Zustand verbleibt, wobei man dem Fluoreszenzfarbstoff einen Redox-Puffer, wobei der Redox-Puffer ein Stoff oder Stoffgemisch ist umfassend wenigstens ein Reduktionsmittel und/oder wenigstens ein Oxidationsmittel, die in einer Elektronentransfer-Reaktion mit dem Fluoreszenzfarbstoff reagieren und Elektronen auf den Fluoreszenzfarbstoff übertragen oder von dem Fluoreszenzfarbstoff empfangen können, zusetzt, wobei das Oxidationsmittel Methylviologen ist und das Reduktionsmittel ausgewählt ist aus der Gruppe umfassend 6-Hydroxy-2,5,7,8-tetramethylchroman-2-carbonsäure, Ascorbinsäure, β-Mercaptoethylamin, Dithiothreitol und/oder Mischungen davon.

2. Verfahren nach Anspruch 1, **dadurch gekennzeichnet, dass** das Verhältnis von Reduktionsmittel zu Oxidationsmittel im Bereich von ≥ 1000:0 bis ≤ 0:1000, bevorzugt im Bereich von ≥ 100:1 bis ≤ 1:100, besonders bevorzugt im Bereich von ≥ 10:1 bis ≤ 1:10, liegt.

3. Verfahren nach Anspruch 1 oder 2, **dadurch gekennzeichnet, dass** das Verhältnis von Reduktionsmittel zu Oxidationsmittel im Bereich von ≥ 1:3 bis ≤ 10:1, bevorzugt im Bereich von ≥ 1:2 bis ≤ 4:1, vorzugsweise im Bereich von ≥ 1:1 bis ≤ 2:1 liegt.

4. Verfahren nach einem der vorherigen Ansprüche, **dadurch gekennzeichnet, dass** der Fluoreszenzfarbstoff eine chemische Modifikation aufweist und/oder an ein Biomolekül gebunden ist, wobei das Biomolekül bevorzugt ausgewählt ist aus der Gruppe umfassend Proteine, Peptide, Antikörper und/oder Nukleinsäuren.

5. Verwendung eines Redox-Puffers zur Verbesserung der Photostabilität und/oder Fluoreszenzintensität eines Fluoreszenzfarbstoffs ausgewählt aus der Gruppe umfassend Rhodamine, Carborhodamine und/oder Cyaninfarbstoffe, wobei der Redox-Puffer wenigstens ein Reduktionsmittel und wenigstens ein Oxidationsmittel umfasst, wobei das Oxidationsmittel ausgewählt ist aus der Gruppe umfassend Methylviologen, Nitrobenzolsäure und/oder p-Benzochinon und wobei das Reduktionsmittel ausgewählt ist aus der Gruppe umfassend 6-Hydroxy-2,5,7,8-tetramethylchroman-2-carbonsäure, Ascorbinsäure, β-Mercaptoethylamin, Dithiothreitol und/oder Mischungen davon, oder wobei der Redox-Puffer wenigstens ein Reduktions-Oxidationsmittel ausgewählt aus der Gruppe umfassend Fe²⁺/Fe³⁺, Ferricyanid/Ferrocyanid, Cytochrom a (Fe²⁺/Fe³⁺), Cytochrom c (Fe²⁺/Fe³⁺) und/oder Cytochrom b2 (Fe²⁺/Fe³⁺) umfasst.

6. Fluoreszenzfarbstoff-Zusammensetzung enthaltend einen Fluoreszenzfarbstoff ausgewählt aus der Gruppe umfassend Rhodamine, Carborhodamine, Oxazin- und/oder Cyaninfarbstoffe und einen Redox-Puffer umfassend wenigstens ein Reduktionsmittel und wenigstens ein Oxidationsmittel, wobei das Oxidationsmittel ausgewählt ist aus der Gruppe umfassend Methylviologen, Nitrobenzolsäure und/oder p-Benzochinon und wobei das Reduktionsmittel ausgewählt ist aus der Gruppe umfassend 6-Hydroxy-2,5,7,8-tetramethylchroman-2-carbonsäure, Ascorbinsäure, β-Mercaptoethylamin, Dithiothreitol und/oder Mischungen davon, oder umfassend wenigstens ein Reduktions-Oxidations-Mittel ausgewählt aus der Gruppe umfassend Fe²⁺/Fe³⁺, Ferricyanid/Ferrocyanid, Cytochrom a (Fe²⁺/Fe³⁺), Cytochrom c (Fe²⁺/Fe³⁺) und/oder Cytochrom b2 (Fe²⁺/Fe³⁺).

## Claims

1. Method of increasing the period of time, during which a fluorescent dye selected from the group comprising rhodamines, carborhodamines, oxazine dyes, and/or cyanine dyes remains in the non-fluorescent state, which method comprises adding to said fluorescent dye a redox buffer, said redox buffer being a substance or mixture of substances, comprising at least one reducing agent and/or at least one oxidizing agent which react with the fluorescent dye in an electron transfer reaction and are capable of transferring electrons to or receiving electrons from said fluorescent dye, wherein the oxidizing agent is methyl viologen and the reducing agent is selected from the group comprising 6-hydroxy-2,5,7,8-tetramethylchroman-2-carboxylic acid, ascorbic acid, β-mercaptoethylamine, dithiothreitol, and/or mixtures thereof.

2. Method according to Claim 1, **characterized in that** the ratio of reducing agent to oxidizing agent ranges from ≥ 1000:0 to ≤ 0:1000, preferably from ≥ 100:1 to ≤ 1:100, particularly preferably from ≥ 10:1 to ≤ 1:10.

3. Method according to Claim 1 or 2, **characterized in that** the ratio of reducing agent to oxidizing agent ranges from ≥ 1:3 to ≤ 10:1, preferably from ≥ 1:2 to ≤ 4:1, preferentially from ≥ 1:1 to ≤ 2:1.

4. Method according to any of the preceding claims, **characterized in that** the fluorescent dye has a chemical modification and/or is bound to a biomolecule, said biomolecule preferably being selected from the group comprising proteins, peptides, antibodies, and/or nucleic acids.

5. Use of a redox buffer for improving the photostability and/or fluorescence intensity of a fluorescent dye selected from the group comprising rhodamines, carborhodamines, and/or cyanine dyes, said redox buffer comprising at least one reducing agent and at least one oxidizing agent, wherein the oxidizing agent is selected from the group comprising methyl viologen, nitrobenzene acid, and/or p-benzoquinone and wherein the reducing agent is selected from the group comprising 6-hydroxy-2,5,7,8-tetramethylchroman-2-carboxylic acid, ascorbic acid, β-mercaptoethylamine, dithiothreitol, and/or mixtures thereof, or said redox buffer comprising at least one reducing/oxidizing agent selected from the group comprising Fe²⁺/Fe³⁺, ferricyanide/ferrocyanide, cytochrome a (Fe²⁺/Fe³⁺), cytochrome c (Fe²⁺/Fe³⁺), and/or cytochrome b2 (Fe²⁺/Fe³⁺).

6. Fluorescent dye composition comprising a fluorescent dye selected from the group comprising rhodamines, carborhodamines, oxazine dyes, and/or cyanine dyes, and a redox buffer comprising at least one reducing agent and at least one oxidizing agent, wherein the oxidizing agent is selected from the group comprising methyl viologen, nitrobenzene acid, and/or p-benzoquinone and wherein the reducing agent is selected from the group comprising 6-hydroxy-2,5,7,8-tetramethylchroman-2-carboxylic acid, ascorbic acid, β-mercaptoethylamine, dithiothreitol, and/or mixtures thereof, or comprising at least one reducing/oxidizing agent selected from the group comprising Fe²⁺/Fe³⁺, ferricyanide/ferrocyanide, cytochrome a (Fe²⁺/Fe³⁺), cytochrome c (Fe²⁺/Fe³⁺), and/or cytochrome b2 (Fe²⁺/Fe³⁺).

## Revendications

1. Procédé de prolongation de la durée pendant laquelle un colorant fluorescent choisi dans le groupe comprenant les rhodamines, les carborhodamines, les colorants oxazine et/ou cyanine reste à l'état non fluorescent, un tampon redox étant ajouté au colorant fluorescent, le tampon redox étant une substance ou un mélange de substances comprenant au moins un réducteur et/ou au moins un oxydant, qui peuvent réagir par une réaction de transfert d'électrons avec le colorant fluorescent et transférer des électrons vers le colorant fluorescent ou recevoir des électrons depuis le colorant fluorescent, l'oxydant étant le méthylviologène et le réducteur étant choisi dans le groupe comprenant l'acide 6-hydroxy-2,5,7,8-tétraméthylchromane-2-carboxylique, l'acide ascorbique, la β-mercaptoéthylamine, le dithiothréitol et/ou leurs mélanges.

2. Procédé selon la revendication 1, **caractérisé en ce que** le rapport entre le réducteur et l'oxydant se situe dans la plage allant de ≥ 1 000:0 à ≤ 0:1 000, de préférence dans la plage allant de ≥ 100:1 à ≤ 1:100, de manière particulièrement préférée dans la plage allant de ≥ 10:1 à ≤ 1:10.

3. Procédé selon la revendication 1 ou 2, **caractérisé en ce que** le rapport entre le réducteur et l'oxydant se situe dans la plage allant de ≥ 1:3 à ≤ 10:1, de préférence dans la plage allant de ≥ 1:2 à ≤ 4:1, avantageusement dans la plage allant de ≥ 1:1 à ≤ 2:1.

4. Procédé selon l'une quelconque des revendications précédentes, **caractérisé en ce que** le colorant fluorescent présente une modification chimique et/ou est relié à une biomolécule, la biomolécule étant de préférence choisie dans le groupe comprenant les protéines, les peptides, les anticorps et/ou les acides nucléiques.

5. Utilisation d'un tampon redox pour améliorer la photostabilité et/ou l'intensité de fluorescence d'un colorant fluorescent choisi dans le groupe comprenant les rhodamines, les carborhodamines et/ou les colorants cyanine, le tampon redox comprenant au moins un réducteur et au moins un oxydant, l'oxydant étant choisi dans le groupe comprenant le méthylviologène, l'acide nitrobenzoïque et/ou la p-benzoquinone, et le réducteur étant choisi dans le groupe comprenant l'acide 6-hydroxy-2,5,7,8-tétraméthylchromane-2-carboxylique, l'acide ascorbique, la β-mercaptoéthylamine, le dithiothréitol et/ou leurs mélanges, ou le tampon redox comprenant au moins un agent oxydoréducteur choisi dans le groupe comprenant Fe²⁺/Fe³⁺, ferricyanure/ferrocyanure, cytochrome a (Fe²⁺/Fe³⁺), cytochrome c (Fe²⁺/Fe³⁺) et/ou cytochrome b2 (Fe²⁺/Fe³⁺).

6. Composition de colorant fluorescent contenant un colorant fluorescent choisi dans le groupe comprenant les rhodamines, les carborhodamines, les colorants oxazine et/ou cyanine, et un tampon redox comprenant au moins un réducteur et au moins un oxydant, l'oxydant étant choisi dans le groupe comprenant le méthylviologène, l'acide nitrobenzoïque et/ou la p-benzoquinone, et le réducteur étant choisi dans le groupe comprenant l'acide 6-hydroxy-2,5,7,8-tétraméthylchromane-2-carboxylique, l'acide ascorbique, la β-mercaptoéthylamine, le dithiothréitol et/ou leurs mélanges, ou comprenant au moins un agent oxydoréducteur choisi dans le groupe comprenant Fe²⁺/Fe³⁺, ferricyanure/ferrocyanure, cytochrome a (Fe²⁺/Fe³⁺), cytochrome c (Fe²⁺/Fe³⁺) et/ou cytochrome b2 (Fe²⁺/Fe³⁺).


### SEQUENCE LISTING

<110> Universität Bielefeld
<120> Verfahren zur Verbesserung der Photostabilität und/oder Kontrolle der Fluoreszenzintensität von Fluoreszenzfarbstoffen
<130> UD 40092 / SAM
<150> DE 10 2007 030 403.1
   <151> 2007-06-29
<160> 1
<170> PatentIn version 3.3
<210> 1
   <211> 60
   <212> DNA
   <213> artificial
<220>
   <223> oligonucleotid
<400> 1
   atcgttacca aagcatcgta aatcgcataa tagcacgtta atttagcacg gacgatcgcc 60